(19) Europäisches Patentamt / European Patent Office / Office européen des brevets

(11) **EP 4 632 632 A1**

(12) **EUROPEAN PATENT APPLICATION**

(43) Date of publication:
**15.10.2025  Bulletin 2025/42**

(21) Application number: **25159590.6**

(22) Date of filing: **24.02.2025**

(51) International Patent Classification (IPC):
**G06N 10/20** (2022.01)

(52) Cooperative Patent Classification (CPC):
**G06N 10/20**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **12.04.2024  JP 2024064645**

(71) Applicant: **FUJITSU LIMITED**
**Kawasaki-shi, Kanagawa 211-8588 (JP)**

(72) Inventor: **NODA, Kunihiro**
**Kawasaki-shi, 211-8588 (JP)**

(74) Representative: **Haseltine Lake Kempner LLP**
**Cheapside House**
**138 Cheapside**
**London EC2V 6BJ (GB)**

(54) **NOISE INFORMATION ESTIMATION PROGRAM, NOISE INFORMATION ESTIMATION METHOD, AND INFORMATION PROCESSING APPARATUS**

(57)  A noise information estimation program including instructions which, when executed by a computer, cause the computer to execute processing including: acquiring a plurality of output distributions that indicate distributions of output states of a plurality of qubits that correspond to each of a plurality of quantum circuits when each of the plurality of quantum circuits is executed a plurality of times for the plurality of qubits; determining execution success/failure of each of the plurality of quantum circuits, based on a deviation degree between each of the plurality of output distributions and a uniform distribution; and estimating information related to noise of each of the plurality of qubits, based on a determination result of the execution success/failure of each of the plurality of quantum circuits and a number of quantum gates applied to each of the plurality of qubits in each of the plurality of quantum circuits.

FIG. 1

EP 4 632 632 A1

## Description

FIELD

The embodiments discussed herein are related to a noise information estimation program, a noise information estimation method, and an information processing apparatus.

BACKGROUND

Quantum computers are capable of executing computations in parallel by using a quantum mechanical effect. Computation using the quantum mechanical effect is referred to as quantum computation. By executing quantum computation, the quantum computers are expected to exponentially improve a computation speed as compared with classical computers (also referred to as von Neumann computers).

A quantum computer executes quantum computation by using qubits. A qubit is a unit of information that may take a state in which a state of |0> and a state of |1> are superimposed. When measurement of a qubit is performed, the state of the qubit probabilistically changes to |0> or |1>. By measuring the state of the qubit a plurality of times, it is possible to estimate the state of that qubit before the measurement, based on appearance probabilities of |0> and |1>.

With a computation system (quantum computation system) using the quantum computer, computation is proceeded by changing the state of the qubit, and a computation result is obtained by performing statistical processing on measurement results of respective computations performed a plurality of times. By causing a predetermined quantum gate to act, a qubit may be changed to a desired state.

An order of quantum gates to be caused to act on each qubit for causing the quantum computer to execute quantum computation may be modeled by a quantum circuit. The quantum computer executes a quantum gate operation on a qubit in accordance with the quantum circuit and measures a final state of the qubit. The measurement result is statistically processed by a classical computer.

When the state of the qubit is accurately changed in accordance with the quantum gate operation, a correct computation result may be obtained. However, a qubit is easily affected by noise, and an error occurs. While error correction is important, a period of ten years or more is expected to elapse before an error-correctable quantum computer is realized. Therefore, with the current technology, it is practical to effectively use a noisy intermediate scale quantum (NISQ) computer without an error correction function.

There is proposed a system in which, in a case where a plurality of quantum processors are coupled to each other to constitute logical qubits, even when an error is detected in a first group of quantum processors, an error check is performed again by a second group of quantum processors to reduce a probability of inappropriate error correction being performed.

There is also proposed a system that performs continuous and parallel optimization of qubit performance in situ while an error correction operation over a quantum system is being executed.

There is also proposed a method of estimating a value of an observation amount without an error by using an extrapolation method by increasing an error rate of a quantum computer, performing sampling at various error rates, and applying obtained measurement values to a multi-exponential decay curve.

There is also proposed a system that probabilistically cancels noise introduced by individual measurements of quantum states and dynamically computes a bias correction weight usable for computing an adjusted (noise-free) expected value for a quantum.

Japanese Laid-open Patent Publication Nos. 2022-161129 and 2022-172094 and U.S. Patent Application Publication Nos. 2023/0196173 and 2023/0196172 are disclosed as related art.

SUMMARY

TECHNICAL PROBLEM

Computation processing over the NISQ computer is affected by noise. Optimization or the like of the quantum circuit may be performed in accordance with a state of noise. The state of noise changes over time. Accordingly, it is considered that a latest state of noise is periodically measured by an existing method such as randomized benchmarking (RB).

However, it takes time to measure the state of noise. For example, when the state of noise is frequently measured by the RB or the like in order to obtain the latest state of noise, the intended computation processing may be postponed.

In one aspect, it is an object of the present disclosure to efficiently acquire information related to noise.

SOLUTION TO PROBLEM

According to an aspect of the embodiments, there is provided a noise information estimation program including instructions which, when executed by a computer, cause the computer to execute processing including: acquiring a plurality of output distributions that indicate distributions of output states of a plurality of qubits that correspond to each of a plurality of quantum circuits when each of the plurality of quantum circuits is executed a plurality of times for the plurality of qubits; determining execution success/failure of each of the plurality of quantum circuits, based on a deviation degree between each of the plurality of output distributions and a uniform distribution; and estimating information related to noise of each of the plurality of qubits, based on a determination result of the execution success/failure of each of the plurality of quantum circuits and a number of quantum gates applied to each of the plurality of qubits in each of the plurality of quantum circuits.

ADVANTAGEOUS EFFECTS OF INVENTION

In one aspect, it is possible to efficiently acquire information related to noise.

BRIEF DESCRIPTION OF DRAWINGS

FIG. 1 is a diagram illustrating an example of a noise information estimation method according to a first embodiment;

FIG. 2 is a diagram illustrating an example of a quantum computation system according to a second embodiment;

FIG. 3 is a diagram illustrating an example of hardware of the quantum computation system;

FIG. 4 is a diagram illustrating an example of a quantum circuit;

FIG. 5 is a diagram illustrating an example of a quantum circuit;

FIG. 6 is a diagram illustrating an example of adjacency relationships of qubits;

FIG. 7 is a diagram illustrating an example of an error rate for each qubit;

FIG. 8 is a diagram illustrating a usage example of the quantum computation system by a user;

FIG. 9 is a diagram illustrating functional examples of a classical computer;

FIG. 10 is a diagram illustrating an example of a quantum circuit of a Grover algorithm;

FIGs. 11A to 11C are diagrams illustrating examples of output distributions corresponding to noise;

FIG. 12 is a flowchart illustrating an example of safety range update;

FIG. 13 is a flowchart illustrating an example of determination processing;

FIGs. 14A and 14B are diagrams illustrating an example of a quantum algorithm involving iteration;

FIG. 15 is a diagram illustrating an example of a quantum circuit executed at an end of an execution period;

FIG. 16 is a diagram illustrating an example of a gate pattern in which an expected output value is a partly-amplified distribution;

FIG. 17 is a flowchart illustrating an example of determination processing;

FIG. 18 is a diagram illustrating an example (part 1) of a quantum circuit;

FIG. 19 is a diagram illustrating an example (part 1) of an output distribution;

FIG. 20 is a diagram illustrating an example (part 2) of a quantum circuit;

FIG. 21 is a diagram illustrating an example (part 2) of an output distribution;

FIG. 22 is a diagram illustrating an example of number-of-gates information at a time of execution success/failure;

FIGs. 23A and 23B are diagrams for describing computation examples of a safety range of a number of applied gates;

FIG. 24 is a diagram illustrating an example of safety range information;

FIG. 25 is a flowchart illustrating a processing example at a time of quantum circuit execution;

FIG. 26 is a flowchart illustrating an example of adjustment processing of a quantum circuit execution method;

FIG. 27 is a diagram illustrating an example of numbers/densities of gates of a quantum circuit; and

FIG. 28 is a diagram illustrating an example of the numbers/densities of gates after optimization.

DESCRIPTION OF EMBODIMENTS

The present embodiments will be described below with reference to the drawings. Each of the embodiments may be implemented by combining a plurality of embodiments within a range without contradiction.

[First Embodiment]

A first embodiment is a noise information estimation method for efficiently acquiring information related to noise.

The first embodiment will be described.

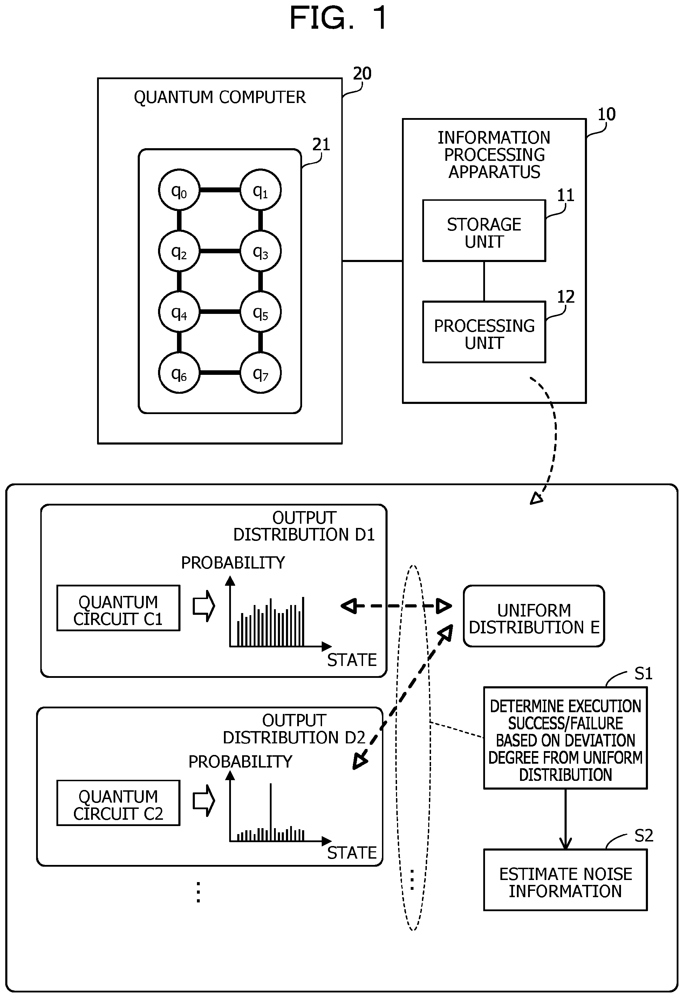

FIG. 1 is a diagram illustrating an example of a noise information estimation method according to the first embodiment. FIG. 1 illustrates an information processing apparatus 10 that executes the noise information estimation method. By executing a noise information estimation program, for example, the information processing apparatus 10 may execute the noise information estimation method. The information processing apparatus 10 is coupled to a quantum computer 20. The quantum computer 20 performs a quantum arithmetic operation based on a quantum circuit. The quantum computer 20 performs the quantum arithmetic operation by using qubits.

By way of example, a graph 21 presents eight qubits $q_0$ to $q_7$ and adjacency relationships of those qubits in the quantum computer 20. One node of the graph 21 corresponds to one qubit. An edge connecting two nodes of the graph 21 indicates that two qubits corresponding to the two nodes are adjacent to each other.

A storage unit 11 may be a volatile semiconductor memory such as a random-access memory (RAM) or a non-volatile storage such as a hard disk drive (HDD) or a flash memory. A processing unit 12 is, for example, a processor such as a central processing unit (CPU), a graphics processing unit (GPU), or a digital signal processor (DSP). However, the processing unit 12 may include an application-specific electronic circuit such as an application-specific integrated circuit (ASIC) or a field-programmable gate array (FPGA). The processor executes a program stored in a memory (this memory may be the storage unit 11) such as a RAM. A set of a plurality of processors may be referred to as a "multiprocessor" or simply a "processor".

The storage unit 11 stores information on a plurality of quantum circuits executed by the quantum computer 20 and an execution result of each of the plurality of quantum circuits. The execution result of the quantum circuit indicates a distribution of output values of respective qubits obtained by measuring values of a plurality of qubits a plurality of times, for example, an output distribution.

From the storage unit 11, the processing unit 12 acquires a plurality of output distributions corresponding to the plurality of quantum circuits executed by the quantum computer 20. Based on a measurement value of each qubit obtained for each quantum circuit from the quantum computer 20, the processing unit 12 may generate the output distribution for each quantum circuit and store the output distribution in the storage unit 11.

For example, the processing unit 12 acquires an output distribution D1 for a quantum circuit C1. The processing unit 12 acquires an output distribution D2 for a quantum circuit C2. The processing unit 12 acquires output distributions in the same manner for the other quantum circuits. For example, the processing unit 12 acquires a plurality of output distributions that indicate distributions of output states of a plurality of qubits that correspond to each of a plurality of quantum circuits when each of the plurality of quantum circuits is executed a plurality of times for the plurality of qubits.

As the quantum circuits C1, C2, and ... used for noise estimation processing, quantum circuits in which an observation frequency of each output is expected to be a partly-amplified distribution are selected from among all the quantum circuits executed by the quantum computer 20 within a certain period. The partly-amplified distribution is a distribution in which a frequency of a specific set of values of a plurality of qubits is higher than frequencies of other sets. All of the output distributions D1, D2, and ... correspond to the partly-amplified distribution. In order to grasp a latest noise state, the "certain period" is preferably a period close to a current time point.

With many representative quantum algorithms, while a large number of computations are parallelized by superposition, only an appearance probability of a desired state (combination of values of qubits) is amplified by using interference of waves. For example, the following is expected for execution success/failure of the quantum circuit. When only an appearance probability of a part of states is amplified, for example, when a partly-amplified distribution is obtained, there is a high possibility that the computation has succeeded. Conversely, when appearance probabilities of all the states are approximately the same, for example, close to a uniform distribution, there is a high possibility that the computation has failed.

For example, the processing unit 12 may specify a quantum circuit to be used for noise estimation processing based on whether or not the algorithm of the executed quantum circuit corresponds to a specific algorithm in which an expected output value is a partly-amplified distribution.

Examples of the specific algorithm in which the expected output value is a partly-amplified distribution include a quantum approximate optimization algorithm (QAOA), a variational quantum Eigensolver (VQE), a Grover algorithm, a Shor's algorithm, and the like. With an algorithm (variational quantum algorithm (VQA)) involving iteration such as QAOA or VQE, the state is brought closer to a desired state by iteration. Consequently, among the quantum circuits in this algorithm, the expected output value of the quantum circuit in the vicinity of the final iteration is a partly-amplified distribution.

Based on a deviation degree between each of a plurality of output distributions and a uniform distribution E, the processing unit 12 determines execution success/failure of each of a plurality of quantum circuits (step S1). For example, the processing unit 12 may calculate the deviation degree between the output distribution and the uniform distribution E by an existing method. An example of this deviation degree includes a Hellinger distance. However, as a scale for measuring the deviation between the output distribution and the uniform distribution E, a scale other than the Hellinger distance may be used.

Other examples of the scale include Kullback-Leibler divergence, Jensen-Shannon divergence, a Wasserstein distance, Shanon entropy, and the like.

When, for example, the deviation degree between the output distribution and the uniform distribution E is greater than or equal to a threshold, the processing unit 12 determines that a partly-amplified distribution is obtained as the output distribution and that the execution of the corresponding quantum circuit has succeeded. When the deviation degree between the output distribution and the uniform distribution E is smaller than the threshold, the processing unit 12 determines that the partly-amplified distribution is not obtained as the output distribution, and determines that the execution of the corresponding quantum circuit has failed.

For example, the processing unit 12 calculates the deviation degree between the output distribution D1 and the uniform distribution E, and compares the calculated deviation degree with the threshold. The deviation degree between the output distribution D1 and the uniform distribution E is smaller than the threshold. In this case, the processing unit 12 determines that the execution of the quantum circuit C1 by the quantum computer 20 has failed.

The processing unit 12 calculates the deviation degree between the output distribution D2 and the uniform distribution E, and compares the calculated deviation degree with the threshold. The deviation degree between the output distribution D2 and the uniform distribution E is greater than or equal to the threshold. In this case, the processing unit 12 determines that the execution of the quantum circuit C2 by the quantum computer 20 has succeeded. With respect to other quantum circuits, the processing unit 12 may also determine execution success/failure in the same manner.

Based on the determination result of execution success/failure of each of the plurality of quantum circuits and the number of quantum gates applied to each of the plurality of qubits in each of the plurality of quantum circuits, the processing unit 12 estimates information related to noise of each of the plurality of qubits (step S2).

For example, the processing unit 12 acquires, for each qubit, the number of quantum gates applied to the qubit, for each quantum circuit for which execution has succeeded, for example, a number of applied gates. The number of quantum gates to be counted is, for example, a number of basis gates (basis quantum gates). For example, when there are three basis gates SX, CX, and RZ, the number of applied gates is counted for each of the basis gates (SX and RZ) for one qubit and the basis gate (CX) for two qubits. The same applies to the count of the number of applied gates described below.

The processing unit 12 specifies, for each qubit, a range of the number of applied gates at the time of execution success. With respect to each quantum circuit for which execution has failed, the processing unit 12 acquires the number of applied gates for each qubit. The processing unit 12 specifies, for each qubit, a range of the number of applied gates at the time of execution failure.

Generally, as the number of applied gates for a qubit increases, noise of the qubit increases, and an error rate tends to increase. For example, a noise state of the qubit is reflected in the information on the range of the number of applied gates at the time of execution success and the range of the number of applied gates at the time of execution failure for each qubit. Therefore, it may be said that the information on the range of the number of applied gates at the time of execution success and the range of the number of applied gates at the time of execution failure for each qubit is an example of the information related to noise of the qubit.

For example, with respect to the focused qubit, the processing unit 12 acquires a range excluding the range of the number of applied gates at the time of execution failure from the range of the number of applied gates at the time of execution success, and sets a range obtained by adding 0 to a lower limit value of the range to the acquired range as a safety range of the number of applied gates for the qubit. For example, the processing unit 12 sets a range in which the range of the number of applied gates at the time of execution success and the range of the number of applied gates at the time of execution failure overlap each other as a semi-safety range of the number of applied gates for the qubit. When the number of applied gates is within the safety range, there is a high possibility that the quantum arithmetic operation may be performed without the influence of noise, for example, safely on the qubit. When the number of applied gates is within the semi-safety range, an error may occur, but the quantum arithmetic operation may be appropriately performed by using the qubit. The safety range and the semi-safety range also reflect the influence of the noise state of each qubit. Therefore, it may be said that information on the safety range and information on the semi-safety range are also examples of the information related to noise of a qubit.

The information on the safety range and the semi-safety range may include not only the number of applied gates for each qubit but also a range of a density of the number of applied gates for qubits adjacent to the qubit, for example, a range of an average value of the number of applied gates for adjacent qubits.

With this, for example, the processing unit 12 obtains information such as a safety range $0 \leq r \leq R1$ or a semi-safety range $R1 < r \leq R2$ of a number of applied gates r for a qubit $q_0$. The processing unit 12 may similarly obtain the information on the safety range and the semi-safety range for other qubits $q_1$ to $q_7$. The processing unit 12 may acquire the safety range and the semi-safety range for each qubit with respect to each of the basis gate for one qubit and the basis gate for two qubits.

With respect to a quantum circuit to be newly executed, the processing unit 12 may adjust the number of applied gates for each qubit based on the information on the safety range and the semi-safety range. For example, first, with respect to the corresponding quantum circuit, the processing unit 12 performs qubit mapping for determining which physical qubit over the quantum processor a logical qubit of the quantum circuit is to be mapped to, such that the number of applied gates falls within the safety range. When the qubit mapping that enables the number of applied gates of each physical qubit to fall within the safety range is possible, the processing unit 12 adopts the mapping. On the other hand, when qubit mapping that enables the number of applied gates of each physical qubit to fall within the safety range is not possible, the processing unit 12 allows a number of applied gates within the semi-safety range for all or some of the corresponding qubits, performs qubit mapping, and adopts the mapping.

The processing unit 12 instructs the quantum computer 20 to execute the corresponding quantum circuit with the qubit mapping adopted by the above-described method. With this, the processing unit 12 may instruct the quantum computer 20 to execute a quantum circuit in consideration of a noise state of each qubit.

With the information processing apparatus 10, a plurality of output distributions corresponding to a plurality of quantum circuits executed by the quantum computer 20 including a plurality of qubits are acquired. Based on a deviation degree between each of the plurality of output distributions and a uniform distribution, execution success/failure of each of the plurality of quantum circuits is determined. Based on a determination result of execution success/failure of each of the plurality of quantum circuits and a number of quantum gates applied to each of the plurality of qubits in each of the plurality of quantum circuits, information related to noise of each of the plurality of qubits is estimated. With this, the information processing apparatus 10 may efficiently acquire information related to noise.

By the way, as an existing method for measuring a magnitude of noise in the quantum computer 20, the above-described RB may be used. With the RB, for example, an average error rate for a specific quantum gate set is measured. By applying the RB, the noise state may be measured in more detail. For example, interleaved RB (IRB) is a method for measuring an average error rate for each quantum gate instead of a gate set. With the IRB, a quantum circuit in which a gate operation for which an error rate is desired to be measured is interposed is prepared for a random gate string in the RB, and an average success probability of a target gate operation is computed. Simultaneous RB (SimRB) is a method for measuring an error rate due to crosstalk. In the SimRB, the RB is simultaneously executed for a pair of qubits for which the influence of crosstalk is desired to be measured, and an average success probability is computed.

However, it takes a long time to execute the existing measurement of the error rate by the RB, the IRB, the SimRB, and the like. This is because a large number of quantum circuits, for example, the randomly selected gate string is executed for each qubit, each qubit pair, and each quantum gate operation. Basically, an execution time increases in order of RB < IRB < SimRB. Therefore, when the existing measurement method is used, there is a possibility that a congestion situation of the quantum computer 20 deteriorates.

In order to more accurately execute the quantum circuit, it is preferable to continuously grasp a latest noise state. Since the noise state of each qubit changes over time, it is conceivable to measure the noise state frequently. With the existing method such as the RB, however, execution takes time, and thus frequent measurement of the noise state significantly deteriorates the congestion situation of the quantum computer 20.

With respect to this, the information processing apparatus 10 may indirectly grasp the magnitude of the noise of each qubit based on the execution result of the quantum circuit by the quantum computer 20 without performing the measurement by the existing method such as the RB. Since the information processing apparatus 10 does not put pressure on a use time of the quantum computer 20, the congestion situation does not deteriorate. By periodically executing the noise information estimation method described above, for example, the information processing apparatus 10 may continuously grasp the latest noise state. By performing the qubit mapping, the optimization of the quantum circuit, or the like based on the information related to the estimated noise, for example, the information on the safety range or the semi-safety range as described above, the information processing apparatus 10 may increase an execution success rate of the quantum circuit.

[Second Embodiment]

Next, a second embodiment will be described.

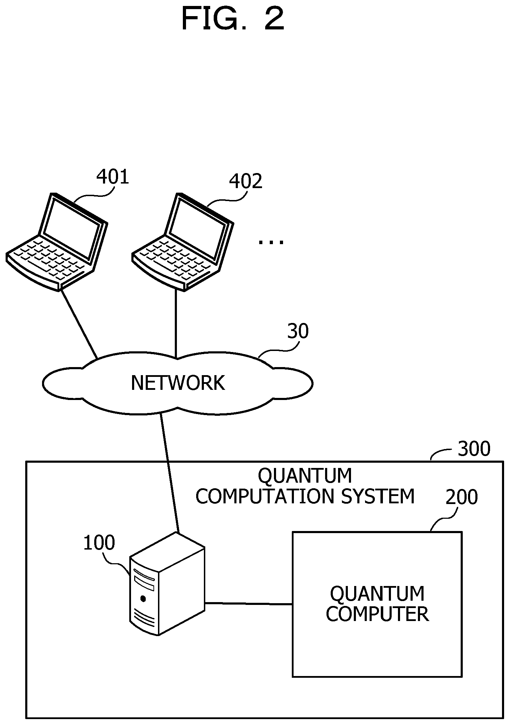

FIG. 2 is a diagram illustrating an example of a quantum computation system according to a second embodiment. A quantum computation system 300 is a computer system using a quantum device. The quantum computation system 300 includes a classical computer 100 and a quantum computer 200. Terminal devices 401, 402, and ... are coupled to the classical computer 100 via a network 30. The terminal devices 401, 402, and ... are computers used by users who request quantum computation by the quantum computation system 300. The classical computer 100 accepts a computation request including a quantum circuit from the terminal devices 401, 402, and .... The quantum circuit indicates an order of operations on qubits by arrangement of elements such as quantum gates. The qubit is a bit capable of expressing a state in which a state of "0" and a state of "1" are superimposed.

In accordance with the quantum circuits accepted from the terminal devices 401, 402, and ..., the classical computer 100 instructs the quantum computer 200 to execute quantum computation. The classical computer 100 acquires a measurement result of each qubit from the quantum computer 200. The classical computer 100 is an example of the information processing apparatus 10.

The quantum computer 200 includes a plurality of qubits and a device for operating each of the plurality of qubits. The quantum computer 200 is a NISQ computer. The plurality of qubits included in the quantum computer 200 may be realized by, for example, a superconducting method, an ion trap method, a diamond spin method, or the like. The quantum computation system 300 includes a plurality of quantum computers including the quantum computer 200.

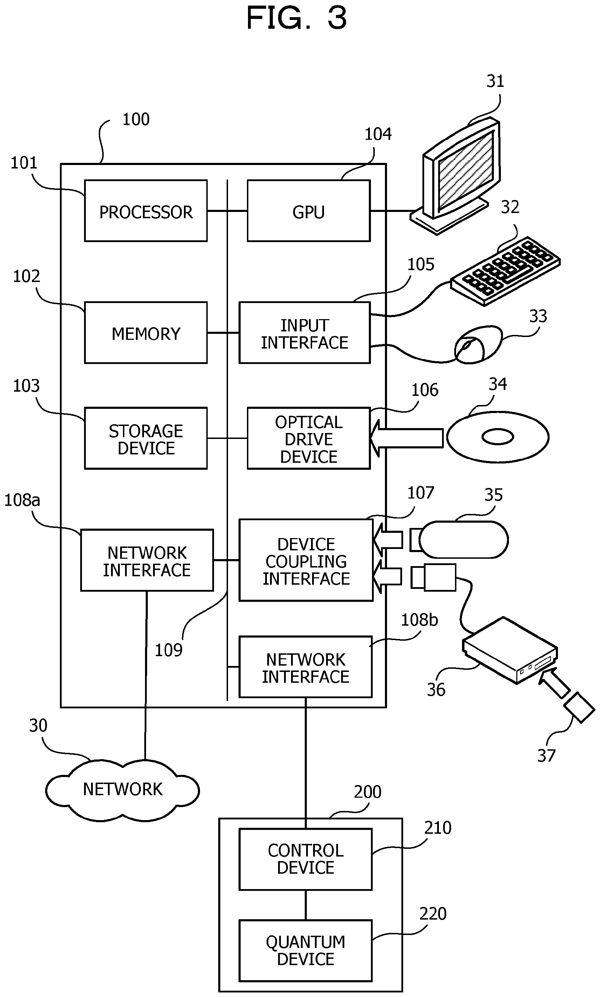

FIG. 3 is a diagram illustrating an example of hardware of the quantum computation system. The entirety device of the classical computer 100 is controlled by a processor 101. A memory 102 and a plurality of peripheral devices are coupled to the processor 101 via a bus 109. The processor 101 may be a multiprocessor. The processor 101 is, for example, a CPU, a microprocessor unit (MPU), or a DSP. At least a part of the functions realized by the processor 101 executing a program may be realized by an electronic circuit such as an ASIC or a programmable logic device (PLD). The processor 101 may also be referred to as "processor circuitry". The processor 101 is an example of the processing unit 12 of the first embodiment.

The memory 102 is used as a main storage device of the classical computer 100. The memory 102 temporarily stores at least a part of an operating system (OS) program or an application program to be executed by the processor 101. The memory 102 stores various types of data to be used for processing by the processor 101. As the memory 102, for example, a volatile semiconductor storage device such as a RAM is used.

The peripheral devices coupled to the bus 109 include a storage device 103, a GPU 104, an input interface 105, an optical drive device 106, a device coupling interface 107, and network interfaces 108a and 108b.

The storage device 103 writes and reads data electrically or magnetically to and from a built-in recording medium. The storage device 103 is used as an auxiliary storage device of the classical computer 100. The storage device 103 stores an OS program, an application program, and various types of data. As the storage device 103, for example, an HDD or a solid-state drive (SSD) may be used. The memory 102 or the storage device 103 is an example of the storage unit 11 of the first embodiment.

The GPU 104 is an arithmetic device that performs image processing. The GPU 104 is an example of a graphic controller. A monitor 31 is coupled to the GPU 104. The GPU 104 displays an image on a screen of the monitor 31 in accordance with an instruction from the processor 101. As the monitor 31, a display device using organic electro luminescence (EL), a liquid crystal display device, or the like is used.

A keyboard 32 and a mouse 33 are coupled to the input interface 105. The input interface 105 transmits signals transmitted from the keyboard 32 and the mouse 33 to the processor 101. The mouse 33 is an example of a pointing device, and other pointing devices may be used. Examples of the other pointing devices include a touch panel, a tablet, a touch pad, a track ball, or the like.

The optical drive device 106 reads data recorded in an optical disc 34 or writes data to the optical disc 34 by using laser light or the like. The optical disc 34 is a portable-type recording medium in which data is recorded such that the data is readable by reflection of light. Examples of the optical disc 34 include a Digital Versatile Disc (DVD), a DVD-RAM, a compact disc read-only memory (CD-ROM), a CD-recordable (CD-R), a CD-rewritable (CD-RW), and the like.

The device coupling interface 107 is a communication interface for coupling the peripheral devices to the classical computer 100. For example, a memory device 35 and a memory reader and writer 36 may be coupled to the device coupling interface 107. The memory device 35 is a recording medium equipped with a function of communicating with the device coupling interface 107. The memory reader and writer 36 is a device that writes data to a memory card 37 or reads data from the memory card 37. The memory card 37 is a card-type recording medium.

The network interface 108a is coupled to the network 30. The network interface 108a transmits and receives data to and from another computer or a communication device via the network 30. The network interface 108a is, for example, a wired communication interface that is coupled to a wired communication device such as a switch or a router by a cable. The network interface 108a may be a wireless communication interface that is coupled, by radio waves, to and communicates with a wireless communication device such as a base station or an access point.

The network interface 108b is an interface for coupling to the quantum computer 200. The processor 101 transmits a quantum circuit to the quantum computer 200 via the network interface 108b and causes the quantum computer 200 to execute quantum computation. The processor 101 acquires a result of the quantum computation via the network interface 108b.

With the hardware as described above, the classical computer 100 may realize processing functions of the second embodiment. The apparatus described in the first embodiment may also be realized by the same hardware as the classical computer 100 illustrated in FIG. 3.

For example, the classical computer 100 realizes the processing functions of the second embodiment by executing a program recorded in a computer-readable recording medium. The program in which a content of processing to be executed by the classical computer 100 is described may be recorded in various recording media. For example, the program to be executed by the classical computer 100 may be stored in the storage device 103. The processor 101 loads at least a part of the program in the storage device 103 to the memory 102, and executes the program. The program to be executed by the classical computer 100 may be recorded in a portable-type recording medium such as the optical disc 34, the memory device 35, or the memory card 37. For example, the program stored in the portable-type recording medium may be executed after being installed in the storage device 103 by the control from the processor 101. The processor 101 may read the program directly from the portable-type recording medium and execute the program.

The quantum computer 200 includes a control device 210 and a quantum device 220. The control device 210 executes a gate operation on a qubit in the quantum device according to a quantum circuit. The quantum device 220 includes a plurality of qubits. The quantum device 220 is, for example, one or a plurality of quantum processing units (QPUs).

Next, a quantum circuit executable by the quantum computer 200 will be described. In the quantum circuit, an operation to be caused to act on a qubit is represented by an array of quantum gates.

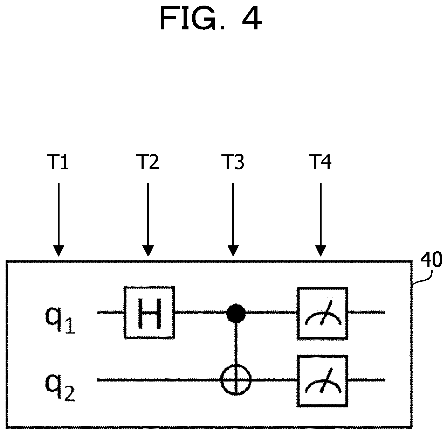

FIG. 4 is a diagram illustrating an example of a quantum circuit. Unlike a classical bit that is only in a state of "0" or "1", a qubit may be in a superposition state $|\phi>$ of "0" and "1". The superposition state $|\phi>$ is represented by Expression (1) below.

$$| \phi > \ = \ \alpha \, |0> \ + \ \beta \, |1> \ ... \ (1)$$

$|0>$ (zero ket) is equivalent to a state corresponding to 0 of the classical bit. $|1>$ (one ket) is equivalent to a state corresponding to 1 of the classical bit. $\alpha$ and $\beta$ are complex numbers and are referred to as probability amplitudes. When the state $|\phi>$ is measured, $|0>$ is observed with a probability of $|\alpha|^2$, and $|1>$ is observed with a probability of $|\beta|^2$. $|\alpha|^2 + |\beta|^2 = 1$ is satisfied.

In a quantum circuit, qubits are described while being vertically arranged. Processing for each qubit in the quantum circuit is described in chronological order from left to right. Processing on a qubit is referred to as a quantum gate. A quantum gate that acts on N qubits is referred to as an N qubit gate (may be referred to as an N quantum gate).

In the example of a quantum circuit 40 in FIG. 4, first, two qubits $q_1$ and $q_2$ exist (T1). Next, a Hadamard gate (H gate) acts on the qubit $q_1$ (T2). Next, a CNOT gate acts on the qubits $q_1$ and $q_2$ by using the qubit $q_1$ as a control bit (T3). The H gate and the CNOT gate are both types of quantum gates. Values of the qubits $q_1$ and $q_2$ are measured (T4). In the measurement of T4, the values of the qubits $q_1$ and $q_2$ are read.

The NISQ computer is affected by noise when performing computation. For example, an error probabilistically occurs in the computation result of the NISQ computer.

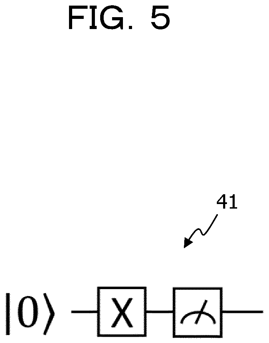

FIG. 5 is a diagram illustrating an example of a quantum circuit. This indicates that a quantum circuit 41 performs observation by inverting $|0>$ to $|1>$. An expected value of the measurement result of the quantum circuit 41 is $|1>$. However, when such a quantum circuit 41 is executed many times, for example, $|0>$ may be observed once every 100 times due to the influence of noise. In this case, due to the influence of noise, bit inversion occurs at an error rate of 1%.

Next, in order to describe the influence of noise in a plurality of qubits, adjacency relationships of the qubits will be exemplified.

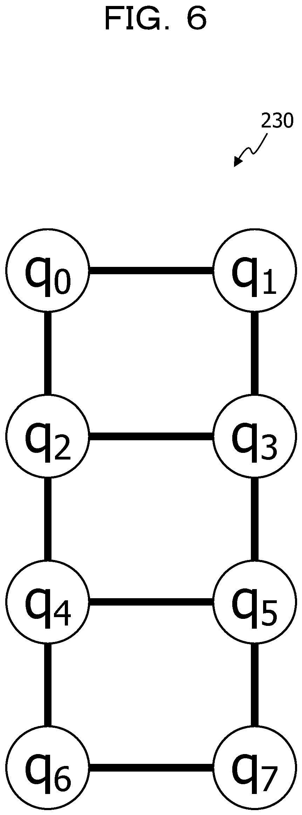

FIG. 6 is a diagram illustrating an example of adjacency relationships of qubits. A graph 230 presents an example of adjacency relationships of eight qubits $q_0$ to $q_7$ included in the quantum device 220. Nodes of the graph 230 indicate qubits. An edge connecting two nodes indicates that two qubits corresponding to these two nodes are adjacent to each other. The graph 230 indicates adjacency relationships of each of the eight qubits $q_0$ to $q_7$.

A state of noise is different for each qubit. Thus, an occurrence frequency and a magnitude of an error vary from qubit to qubit.

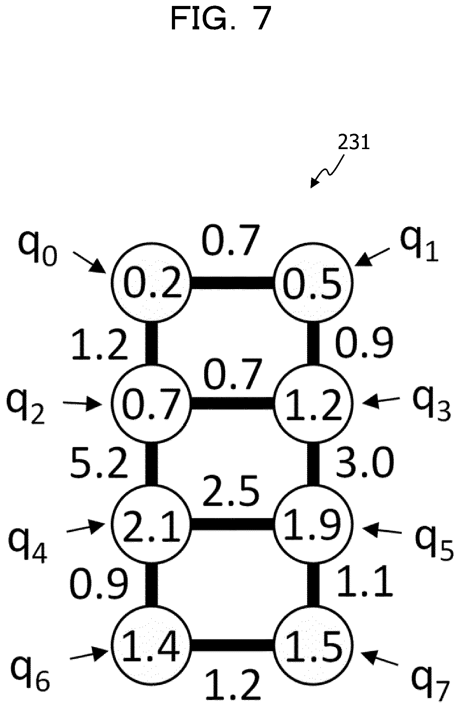

FIG. 7 is a diagram illustrating an example of an error rate for each qubit. A graph 231 describes an error rate for each node and each edge of the graph 230. A numerical value in a node indicates an error rate of a measurement operation of a qubit. For example, an error rate of a measurement operation of the qubit $q_0$ is 0.2%. An error rate of a measurement operation of the qubit $q_4$ is 2.1%. The numerical value added to the edge indicates an error rate occurring in a two-qubit gate operation. For example, an error rate of a two-qubit gate operation of the qubits $q_0$ and $q_1$ is 0.7%. An error rate of a two-qubit gate operation of the qubits $q_2$ and $q_4$ is 5.2%.

However, various errors other than the errors exemplified herein may occur. For example, there is an error that occurs in a one-qubit operation. There is also an error due to an operation on a certain qubit affecting a state of another qubit (referred to as crosstalk).

By considering the state of noise, the classical computer 100 switches an execution method and an optimization method of the quantum circuit by the quantum computer 200. For example, the classical computer 100 maps the logical qubits of the quantum circuit to the qubits (physical qubits) over the quantum device 220 while avoiding qubits (physical qubits) having large noise.

Alternatively, the classical computer 100 adjusts the optimization method of the quantum circuit and adjusts a degree of reduction in the number of gates such that the influence of noise falls within an allowable range. The optimization of the quantum circuit is processing for reducing the number of gates and improving resistance to noise by converting a quantum gate or a combination of quantum gates in the quantum circuit into another quantum gate or another combination of quantum gates. When, for example, noise is relatively large, the classical computer 100 applies a large number of optimization algorithms and takes time to reduce the number of gates by a large amount. When noise is relatively small, only a small number of optimization algorithms are applied, and the optimization processing is completed in a short time.

The frequency and magnitude of errors occurring in each qubit change over time. Therefore, the quantum computation system 300 periodically measures a state of noise, grasps a latest state of noise, and performs the optimization as described above. Existing methods for measuring the noise state include the above-described RB, IRB, SimRB, and the like. However, it takes a long time to execute the measurement of the error rate by the RB, the IRB, and the SimRB.

By the way, the quantum computation system 300 provides a quantum computation environment as a quantum cloud service. Next, a usage example of the quantum computation system 300 by a user will be described.

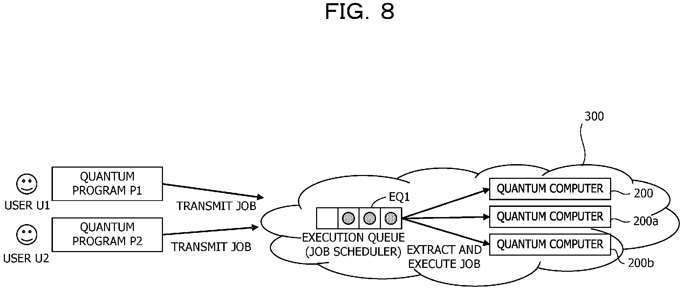

FIG. 8 is a diagram illustrating a usage example of the quantum computation system by a user. First, a user defines a quantum circuit by using the terminal devices 401, 402, and the like, and transmits a job for performing computation of the defined quantum circuit to the quantum computation system 300 by using the terminal devices 401, 402, or the like. By using the terminal device 401, a user U1 creates a quantum program P1 in which a quantum circuit is defined, and transmits a job corresponding to the quantum program P1 from the terminal device 401 to the quantum computation system 300, for example. By using the terminal device 402, a user U2 creates a quantum program P2 in which a quantum circuit is defined, and transmits a job corresponding to the quantum program P2 from the terminal device 402 to the quantum computation system 300.

The classical computer 100 receives these jobs. For example, the classical computer 100 functions as a job scheduler that inputs the jobs to the quantum computer 200, and includes an execution queue EQ1 that holds the jobs. The classical computer 100 stores the received jobs in the execution queue EQ1.

The job scheduler determines which job is to be executed next, extracts the job from the execution queue EQ1, and causes the quantum computer 200, 200a, or 200b to execute the job. The quantum computers 200, 200a, and 200b are quantum computers included in the quantum computation system 300. The job scheduler acquires execution results of the jobs from the quantum computers 200, 200a, and 200b, and transmits the execution results to the terminal devices 401, 402, and the like used by the users U1 and U2.

Currently, the number of quantum computers and the number of usable qubits in the quantum computation system 300 are both in a small state. Therefore, a waiting time for the job execution is very long. For example, it is in a very congested state. It may take about 60 minutes or one day or more from when a job is input to the execution queue EQ1 to when the job is actually executed.

Therefore, in the quantum computation system 300, when existing processing such as RB, IRB, or SimRB is periodically executed to update noise information, a user job may not be executed during the execution of this processing and the user job is postponed, which is a cause of congestion. When an execution frequency of the RB or the like is increased, it is possible to provide the latest noise information with higher accuracy, but the congestion situation deteriorates accordingly.

Accordingly, the quantum computation system 300 makes it possible to indirectly grasp the magnitude of noise of each qubit at a relatively low additional processing cost without deteriorating the congestion situation of the quantum cloud service. For example, the classical computer 100 has the following functions.

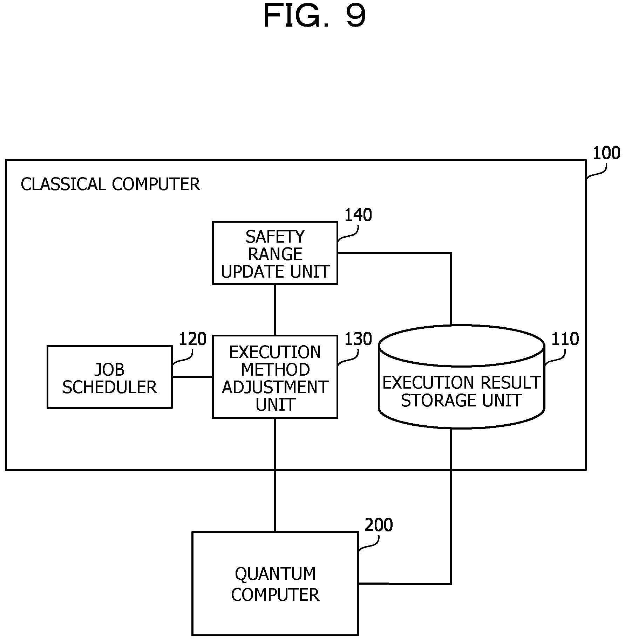

FIG. 9 is a diagram illustrating functional examples of a classical computer. The classical computer 100 includes an execution result storage unit 110, a job scheduler 120, an execution method adjustment unit 130, and a safety range update unit 140. A storage area of the memory 102 or the storage device 103 is used as the execution result storage unit 110. The job scheduler 120, the execution method adjustment unit 130, and the safety range update unit 140 are realized by the processor 101 executing the program stored in the memory 102. However, the job scheduler 120 may be realized by a classical computer other than the classical computer 100 included in the quantum computation system 300.

While the quantum computer 200 is mainly exemplified below, the classical computer 100 performs the same processing as the processing performed on the quantum computer 200 on other quantum computers including the quantum computers 200a and 200b.

The execution result storage unit 110 stores information on the execution result of the quantum circuit by the quantum computer 200. Information held in the execution result storage unit 110 includes an execution history of the quantum circuits.

The job scheduler 120 holds jobs received from the terminal devices 401, 402, and the like in the execution queue EQ1. The job scheduler 120 selects a job to be executed next from the jobs held in the execution queue EQ1, and instructs the execution method adjustment unit 130 to execute the selected job. The job scheduler 120 acquires the execution result of the quantum circuit from the quantum computer 200, and responds to the terminal device 401, 402, or the like which is the transmission source of the job.

Based on a latest safety range determined by the safety range update unit 140, the execution method adjustment unit 130 adjusts the execution method of the job, for example, the quantum circuit. The safety range indicates a range of a number of gates allowed for each qubit and a range of a gate density for adjacent qubits. The gate density is an average number of gates for each qubit adjacent to the focused qubit. In the adjustment of the execution method, the qubit mapping and an optimization degree are adjusted.

Based on the adjustment result of the execution method, the execution method adjustment unit 130 causes the quantum computer 200 to execute the quantum circuit. The quantum computer 200 outputs the execution result of the quantum circuit to the classical computer 100. The execution result of the quantum circuit by the quantum computer 200 is stored in the execution result storage unit 110. The execution result of the quantum circuit by the quantum computer 200 is returned to the job scheduler 120.

At certain time intervals, the safety range update unit 140 updates the latest safety range based on the execution result of the quantum circuit within a time window. For example, the safety range update unit 140 stores information on the latest safety range in the execution result storage unit 110. The safety range update unit 140 notifies the execution method adjustment unit 130 of the latest safety range. The time window is a time range within past T seconds from a current time point. A value of T is determined in advance.

With many representative quantum algorithms, while a large number of computations are parallelized by superposition, only an appearance probability of a desired state is amplified by using interference of waves. For example, the following is expected for execution success/failure of the quantum circuit. When the appearance probability of each state is a partly-amplified distribution, there is a high possibility that the computation has succeeded. On the other hand, when the appearance probabilities of all the states are approximately the same, for example, close to a uniform distribution, there is a high possibility that the computation has failed.

Therefore, by computing a deviation degree (distance) between an output distribution of the quantum circuit and the uniform distribution, it is possible to estimate execution success/failure of the quantum circuit, and to obtain information on a number of applied gates at the time of success/failure. For example, in a case where the deviation degree (distance) from the uniform distribution is greater than or equal to a threshold, it is determined to be successful.

With this, it is possible to indirectly estimate the magnitude of noise. For example, the number of gates allowed for success or the number of gates not allowed for success is an index reflecting the magnitude of noise. By using this index, it is possible to adjust the execution method of the quantum circuit. For example, the qubit mapping and the optimization degree may be adjusted so as to fall within an allowable number of gates.

Next, an output at the time of execution success/failure of the quantum circuit will be described.

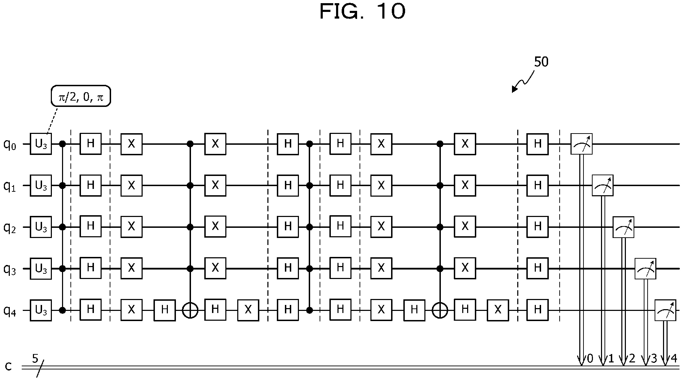

FIG. 10 is a diagram illustrating an example of a quantum circuit of a Grover algorithm. A quantum circuit 50 is an example of the quantum circuit of the Grover algorithm. "$U_3$" in the quantum circuit 50 indicates a unitary rotation gate. In the $U_3$ gate, rotation angles around three axes in the Bloch sphere are designated.

"X" in the quantum circuit 50 indicates an X gate that performs bit inversion.

In the quantum circuit 50, computation using five qubits $q_0$ to $q_4$ is performed, and a five-bit measurement value (c) is obtained. A desired state of the quantum circuit 50 is 11111.

It is assumed that the quantum circuit 50 is executed under each of the conditions of no noise, small noise, and large noise. The number of executions (number of shots) is 1024. Basis gates are SX, CX, and RZ.

The error rate, for example, the magnitude of noise, is as follows for the cases of small noise and large noise.

In the case of small noise, it is assumed that an error rate of a one-qubit gate (may be referred to as a one-quantum gate) is 0.5%, an error rate of a two-qubit gate (may be referred to as a two-quantum gate) is 1%, an error rate of erroneously determining 0 as 1 in measurement is 1%, and an error rate of erroneously determining 1 as 0 in measurement is 5%.

In the case of large noise, it is assumed that an error rate of a one-qubit gate is 1%, an error rate of a two-qubit gate is 5%, an error rate of erroneously determining 0 as 1 in measurement is 1%, and an error rate of erroneously determining 1 as 0 in measurement is 5%.

In the case of no noise, all the error rates are 0%. With respect to the quantum circuit 50, output distributions obtained in the respective cases of no noise, small noise, and large noise are as follows.

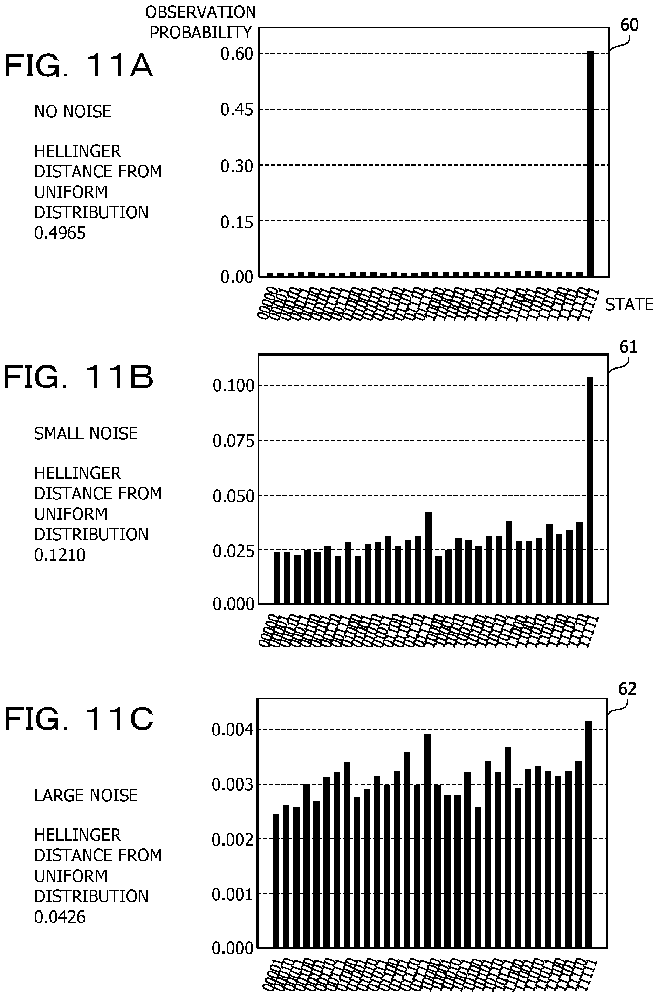

FIGs. 11A to 11C are diagrams illustrating examples of the output distributions corresponding to noise. FIG. 11A exemplifies an output distribution 60 in the case of no noise. FIG. 11B exemplifies an output distribution 61 in the case of small noise. FIG. 11C exemplifies an output distribution 62 in the case of large noise. A horizontal axis of the output distributions 60, 61, and 62 indicates a measured state. A vertical axis of the output distributions 60, 61, and 62 indicates an observation probability.

A deviation degree between each output distribution and a uniform distribution is represented by, for example, a Hellinger distance. The Hellinger distance between the output distribution 60 and the uniform distribution is 0.4965. The Hellinger distance between the output distribution 61 and the uniform distribution is 0.1210. The Hellinger distance between the output distribution 62 and the uniform distribution is 0.0426. As described above, as the noise increases, the distribution is brought closer to the uniform distribution, and the probability that a state other than the desired state is observed increases.

Thus, by comparing the deviation degree between each output distribution and the uniform distribution with a threshold, the safety range update unit 140 may determine execution success/failure of the quantum circuit 50. For example, the safety range update unit 140 may determine that the execution is successful in a case where the deviation degree is greater than or equal to the threshold, and may determine that the execution has failed in a case where the deviation degree is smaller than the threshold.

Scales other than the Hellinger distance may be used as the deviation degree. As described above, other scales such as Kullback-Leibler divergence, Jensen-Shannon divergence, Wasserstein distances, and Shanon entropy may be used as the deviation degree.

Next, a processing procedure of the classical computer 100 will be described.

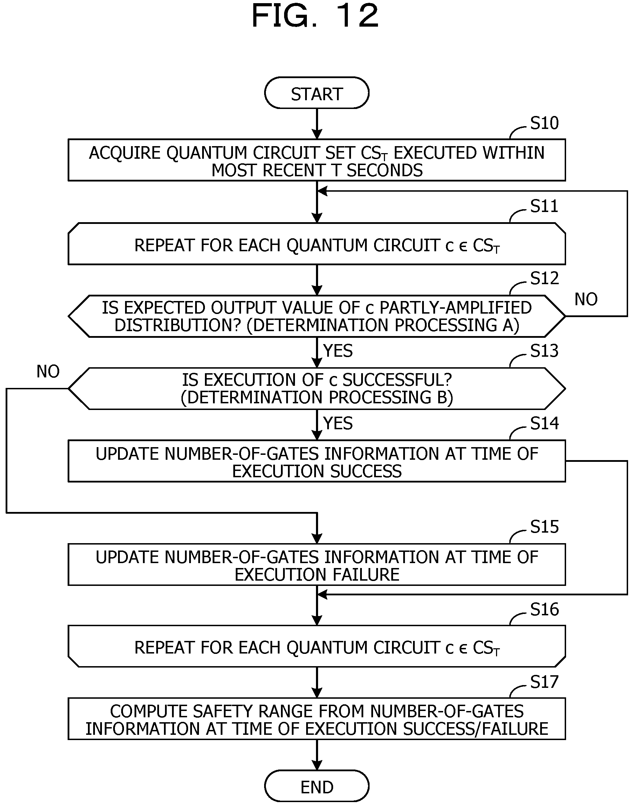

FIG. 12 is a flowchart illustrating an example of safety range update. The classical computer 100 executes the following safety range update in a predetermined cycle.

(S10) The safety range update unit 140 acquires a quantum circuit set $CS_T$ executed within the most recent T seconds. For example, the safety range update unit 140 may acquire the quantum circuit set $CS_T$ based on an execution history of the quantum circuits stored in the execution result storage unit 110.

(S11) The safety range update unit 140 repeatedly executes steps S12 to S15 for each quantum circuit c $\in CS_T$.

(S12) The safety range update unit 140 determines whether or not an expected output value of the quantum circuit c is a partly-amplified distribution. When the expected output value of the quantum circuit c is the partly-amplified distribution, the processing proceeds to step S13. When the expected output value of the quantum circuit c is not the partly-amplified distribution, the processing proceeds to step S11, and a quantum circuit c $\in CS_T$ to be processed next is selected. Step S12 is referred to as determination processing A. Details of the determination processing A will be described later.

(S13) The safety range update unit 140 determines whether or not the execution of the quantum circuit c has succeeded. When it is determined that the execution of the quantum circuit c has succeeded, the processing proceeds to step S14. When it is determined that the execution of the quantum circuit c has failed, the processing proceeds to step S15. Determination of the execution success/failure in step S13 is performed based on a comparison between the output distribution of the quantum circuit c and the uniform distribution. Step S13 is referred to as determination processing B. Details of the determination processing B will be described later.

(S14) The safety range update unit 140 updates number-of-gates information at the time of execution success. The processing proceeds to step S16. The number-of-gates information at the time of execution success indicates a number of applied gates and an applied gate density for each qubit of the quantum circuit c for which execution has succeeded.

(S15) The safety range update unit 140 updates number-of-gates information at the time of execution failure. The number-of-gates information at the time of execution failure indicates a number of applied gates and an applied gate density for each qubit of the quantum circuit c for which execution has failed.

(S16) When the repetitions for each quantum circuit c $\in CS_T$ end, the safety range update unit 140 advances the processing to step S17.

(S17) The safety range update unit 140 computes a safety range of the number/density of applied gates for each qubit from the number-of-gates information at the time of execution success/failure. The safety range update processing ends. Details of the number-of-gates information and the safety range information will be described later.

As described above, with many representative quantum algorithms such as the QAOA, the VQE, the Grover algorithm, and the Shor's algorithm, the expected output value of the quantum circuit is a partly-amplified distribution. With an algorithm (VQA) involving iteration such as the QAOA or the VQE, since the state is brought closer to a desired state while the iteration is performed, the expected output value in the vicinity of the final iteration is a partly-amplified distribution.

Many of the quantum circuits transmitted to the quantum computation system 300 are expected to have expected output values that are partly-amplified distributions. However, there may be a case where a quantum circuit of which the expected output value is not a partly-amplified distribution is transmitted. As an example of the quantum circuit of which the expected output value is not a partly-amplified distribution, a circuit including a random gate string, for example, a random circuit may be exemplified.

Since it is assumed that the expected output value of the quantum circuit c is a partly-amplified distribution in step S13 and the subsequent steps, it is determined whether the expected output value of the quantum circuit c is a partly-amplified distribution in the determination processing A in step S12, and step S13 is executed only when the expected output value is a partly-amplified distribution.

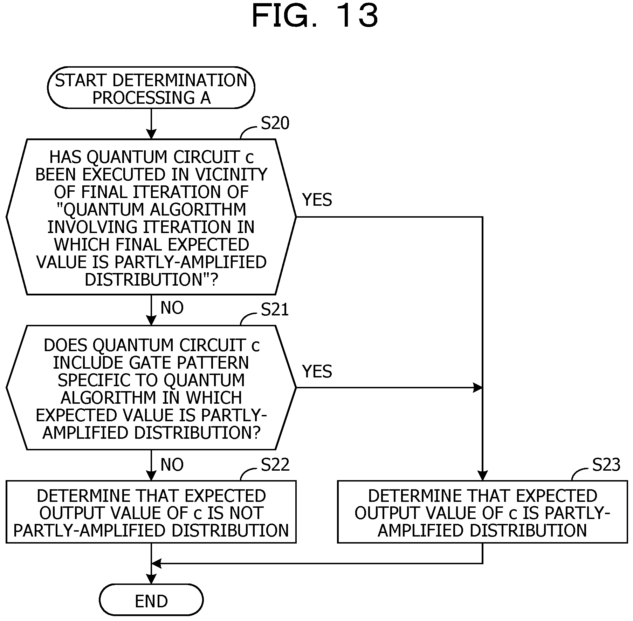

FIG. 13 is a flowchart illustrating an example of the determination processing A. The determination processing A corresponds to step S12.

(S20) The safety range update unit 140 determines whether or not the quantum circuit c has been executed in the vicinity of the final iteration of the "quantum algorithm involving iteration in which a final expected value is a partly-amplified distribution". When the quantum circuit c has been executed in the vicinity of the final iteration of the "quantum algorithm involving iteration in which a final expected value is a partly-amplified distribution", the processing proceeds to step S23. When the quantum circuit c has not been executed in the vicinity of the final iteration of the "quantum algorithm involving iteration in which a final expected value is a partly-amplified distribution", the processing proceeds to step S21.

(S21) The safety range update unit 140 determines whether or not the quantum circuit c includes a gate pattern specific to a quantum algorithm in which an expected value is a partly-amplified distribution. When the quantum circuit c includes the gate pattern specific to a quantum algorithm in which an expected value is a partly-amplified distribution, the processing proceeds to step S23. When the quantum circuit c does not include the gate pattern specific to a quantum algorithm in which an expected value is a partly-amplified distribution, the processing proceeds to step S22.

(S22) The safety range update unit 140 determines that the expected output value of the quantum circuit c is not a partly-amplified distribution. The determination processing A ends.

(S23) The safety range update unit 140 determines that the expected output value of the quantum circuit c is a partly-amplified distribution. The determination processing A ends.

By detecting that "the quantum algorithm in which an expected output value is a partly-amplified distribution" has been executed, the safety range update unit 140 performs the determination processing A.

For example, in step S20, the safety range update unit 140 first detects that the user has executed a quantum algorithm (VQA) involving iteration such as VQE. When an application programming interface (API) for the VQA is executed or when the quantum circuit c matches a representative ansatz circuit used in the VQE or the like, the safety range update unit 140 may perform the detection. When the quantum circuit c has been executed at the end of the VQA execution period, the safety range update unit 140 determines Yes in step S20.

Next, an example of the quantum algorithm (VQA) detected in step S20 will be described.

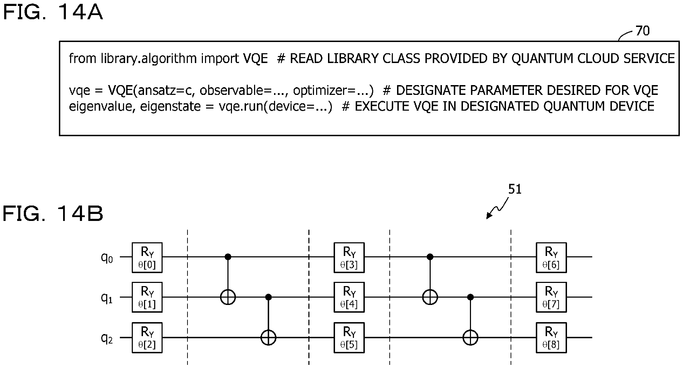

FIGs. 14A and 14B are diagrams illustrating an example of the quantum algorithm involving iteration. FIG. 14A exemplifies a source code 70 of the API for VQE execution. This API is provided by a software development kit (SDK) for using the quantum cloud service. FIG. 14B exemplifies a representative ansatz circuit 51 used in the VQE or the like. The ansatz circuit 51 indicates a shape example of TwoLocal of three qubits.

When the quantum computation system 300 provides the API indicated by the source code 70 for the VQA execution, the safety range update unit 140 determines that the quantum algorithm involving iteration has been executed based on the execution of this API.

Alternatively, when the quantum circuit c matches the representative ansatz circuit 51 used in the VQE or the like, the safety range update unit 140 determines that the quantum algorithm involving iteration has been executed. The representative ansatz circuits (TwoLocal, RealAmplitudes, and the like) have fixed shapes. Thus, the safety range update unit 140 may detect that the quantum algorithm involving iteration such as VQE has been executed from the matching between the representative ansatz circuit and the quantum circuit c.

As described above, in step S20, the safety range update unit 140 also determines whether or not the quantum circuit c has been executed at the end of the VQA (or VQE) execution period.

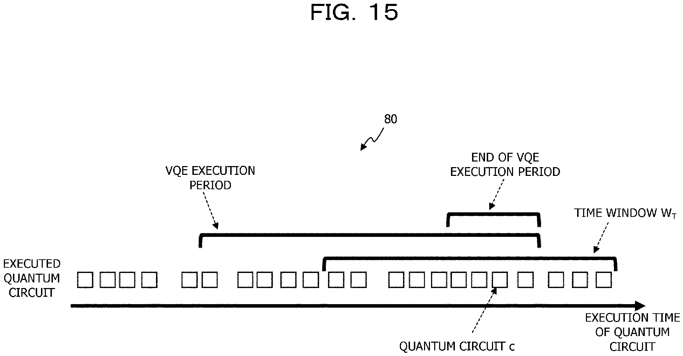

FIG. 15 is a diagram illustrating an example of the quantum circuit executed at the end of the execution period. The execution result storage unit 110 holds an execution history of a plurality of quantum circuits for which execution requests have been made by a plurality of users. The execution history is information in which execution results of the plurality of quantum circuits are arranged in order of execution time. A time chart 80 indicates the execution history of the plurality of quantum circuits. A direction from left to right in the time chart 80 is a positive direction of time. A time window $W_T$ is a period within the past T seconds from the current time point, and is a target period of safety range update processing. The VQE execution period is a period during which quantum circuits for VQE have been executed. The end of the VQE execution period is a period during which a predetermined number (four in the example of FIG. 15) of quantum circuits up to the last quantum circuit in the VQE execution period have been executed. The predetermined number is determined in advance. In the example in FIG. 15, the quantum circuit c is a quantum circuit executed at the end of the VQE execution period.

When detecting that the quantum circuit c has been executed by the VQE and executed at the end of the VQE execution period, the safety range update unit 140 determines Yes in step S20.

Next, a specific example of the determination in step S21 will be described.

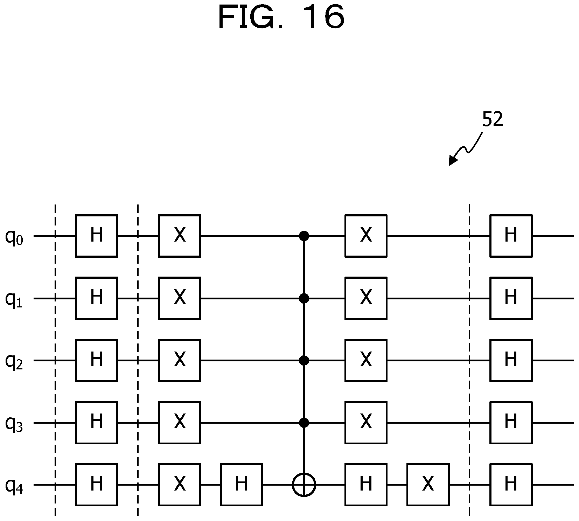

FIG. 16 is a diagram illustrating an example of a gate pattern in which an expected output value is a partly-amplified distribution. As described above, the Grover algorithm is exemplified as an example of a quantum algorithm in which an expected output value is a partly-amplified distribution. In the Grover algorithm, a gate pattern 52 appears repeatedly. The gate pattern 52 indicates an example of a gate pattern specific to the Grover algorithm. The quantum circuit 50 in FIG. 10 is an example of an entire image of a quantum circuit of the Grover algorithm.

When the gate pattern 52 is included in the quantum circuit c in step S21, the safety range update unit 140 determines that the quantum circuit c is a quantum circuit of the Grover algorithm, and determines Yes in step S21.

As described above, the safety range update unit 140 may determine whether or not the expected output value of the quantum circuit c is a partly-amplified distribution depending on whether or not the quantum circuit c includes a gate pattern specific to a quantum algorithm in which an expected output value is a partly-amplified distribution.

In step S21, the safety range update unit 140 determines whether or not the quantum circuit c has a feature specific to each quantum algorithm. Thus, the safety range update unit 140 may make a determination by creating a machine learning model instead of making a determination on the inclusion of the gate pattern. For example, the safety range update unit 140 may train a machine learning model that receives a feature amount corresponding to a structure of a quantum circuit as an input and outputs a quantum algorithm name. By using this machine learning model, the safety range update unit 140 may determine whether or not the quantum circuit c is "a quantum algorithm in which an expected output value is a partly-amplified distribution".

With this, when Yes is determined in step S20 or step S21, the safety range update unit 140 determines that the expected output value of the quantum circuit c is a partly-amplified distribution.

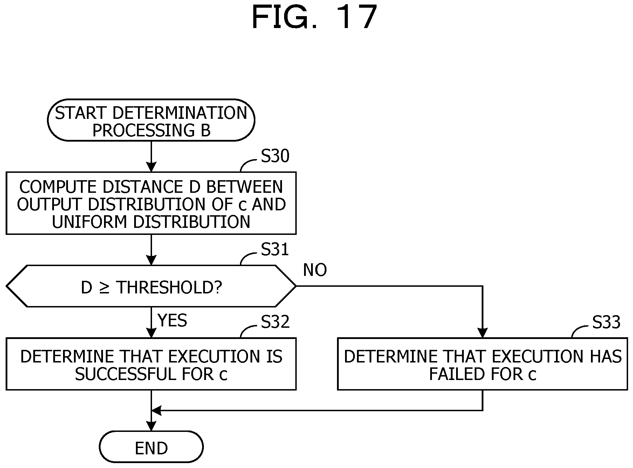

FIG. 17 is a flowchart illustrating an example of the determination processing B. The determination processing B corresponds to step S13.

(S30) The safety range update unit 140 computes a Hellinger distance D between the output distribution of the quantum circuit c and the uniform distribution. The Hellinger distance D is an example of a deviation degree between the output distribution of the quantum circuit c and the uniform distribution.

(S31) The safety range update unit 140 determines whether or not the Hellinger distance D is greater than or equal to a threshold ($D \geq$ threshold). When $D \geq$ threshold, the processing proceeds to step S32. When $D <$ threshold, the processing proceeds to step S33.

(S32) The safety range update unit 140 determines that the execution is successful for the quantum circuit c. The determination processing B ends.

(S33) The safety range update unit 140 determines that the execution has failed for the quantum circuit c. The determination processing B ends.

Next, by exemplifying two quantum circuits of the Grover algorithm having different depths, a specific example of the determination processing B will be described. These two quantum circuits are assumed to be executed with the same magnitude of noise. The threshold in step S31 is set to D = 0.06. First, a shallower quantum circuit of the two quantum circuits having different depths will be exemplified.

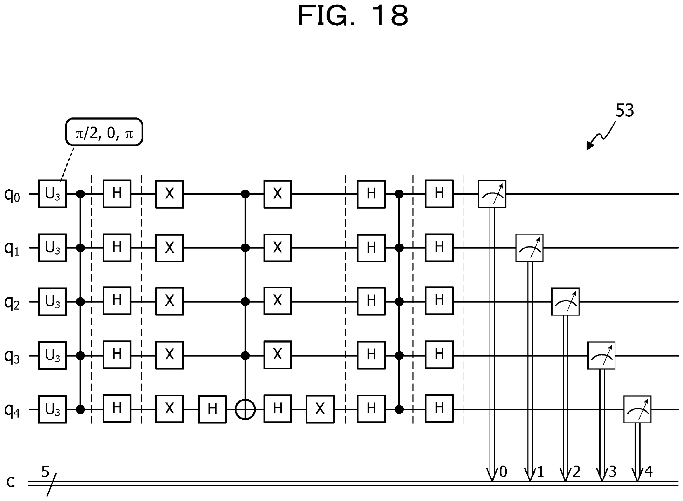

FIG. 18 is a diagram illustrating an example (part 1) of a quantum circuit. A quantum circuit 53 is an example of a quantum circuit of the Grover algorithm. The quantum circuit 53 corresponds to a shallow quantum circuit.

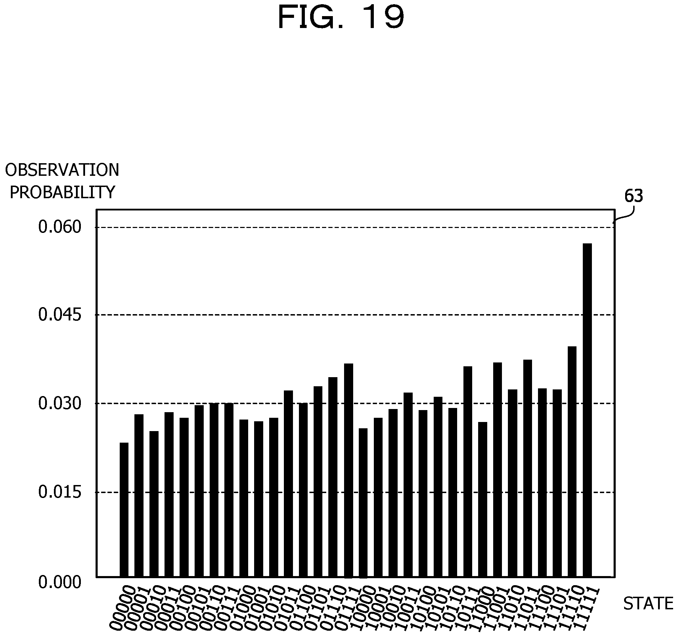

FIG. 19 is a diagram illustrating an example (part 1) of an output distribution. An output distribution 63 indicates an example of an output distribution of the quantum circuit 53. A horizontal axis of the output distribution 63 indicates a state represented by a set of values of five qubits, and a vertical axis indicates an observation probability of this state. In the example of the output distribution 63, the Hellinger distance D from the uniform distribution is 0.0625. Since D = 0.0625 $\geq$ threshold TD = 0.06, the safety range update unit 140 determines that the execution is successful for the quantum circuit 53.

Next, a deeper quantum circuit of the two quantum circuits having different depths will be described.

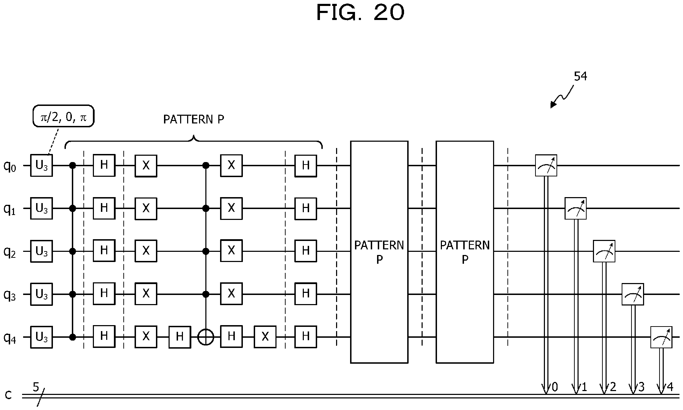

FIG. 20 is a diagram illustrating an example (part 2) of a quantum circuit. A quantum circuit 54 is an example of a quantum circuit of the Grover algorithm. The quantum circuit 54 corresponds to a deep quantum circuit. In the quantum circuit 54, a pattern P is repeated three times. The pattern P is a gate pattern specific to the Grover algorithm.

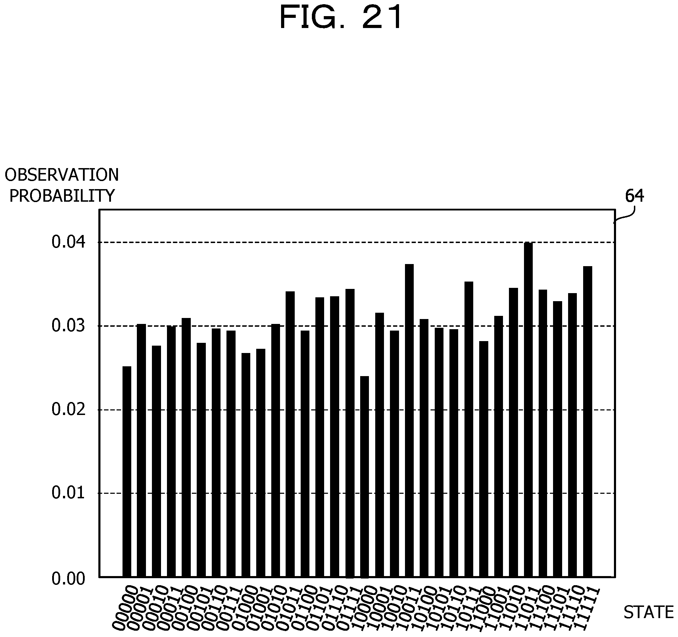

FIG. 21 is a diagram illustrating an example (part 2) of an output distribution. An output distribution 64 indicates an example of an output distribution of the quantum circuit 54. A horizontal axis of the output distribution 64 indicates a state represented by a set of values of five qubits, and a vertical axis indicates an observation probability of this state. In the example of the output distribution 64, the Hellinger distance D from the uniform distribution is 0.0398. Since D = 0.0398 < threshold TD = 0.06, the safety range update unit 140 determines that the execution has failed for the quantum circuit 54.

Even with the same quantum circuit, execution success/failure varies depending on the magnitude of noise. For example, the threshold TD is set to 0.06 in the output distribution 61 (in the case of small noise) and the output distribution 62 (in the case of large noise) in FIGs. 11B and 11C described above. The safety range update unit 140 determines that the execution is successful for the output distribution 61 in the case of the small noise. The safety range update unit 140 determines that the execution has failed for the output distribution 62 in the case of the large noise.

Next, the update of the number-of-gates information in steps S14 and S15 will be exemplified.

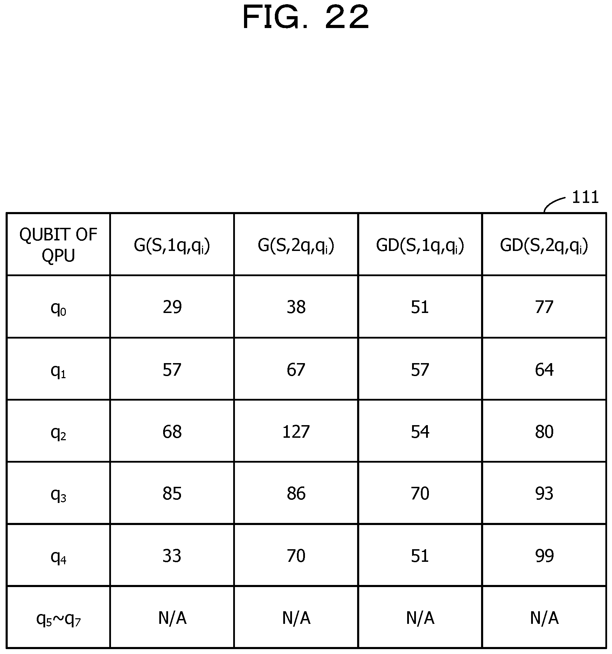

FIG. 22 is a diagram illustrating an example of the number-of-gates information at the time of execution success/failure. A combination of the information on the execution success/failure and the number/density of gates included in the quantum circuit c is an index indirectly reflecting the magnitude of noise. For example, the number/density of gates at which the possibility of success increases changes depending on the magnitude of noise.

Accordingly, with respect to the quantum circuit c, the safety range update unit 140 computes a total number of one-qubit gates and a total number of two-qubit gates applied to a qubit $q_i$ (physical qubit $q_i$). The number of applied gates of the qubit $q_i$ is denoted by $G(P1, P2, q_i)$. P1 is set to "S" (execution success) or "F" (execution failure). P2 is set to "1q" (one-qubit gate) or "2q" (two-qubit gate). The reason why the one-qubit gate and the two-qubit gate are separately counted is that the error rates are significantly different between respective gates, in many cases.

With respect to the quantum circuit c, the safety range update unit 140 computes a density of the one-qubit gates and a density of the two-qubit gates applied to a peripheral region including the qubit $q_i$. The density of the one-qubit gates is a value obtained by dividing the total number of one-qubit gates applied to the peripheral region of the qubit $q_i$ by the number of qubits within the peripheral region. The density of the two-qubit gates is a value obtained by dividing the total number of two-qubit gates applied to the peripheral region of the qubit $q_i$ by the number of qubits within the peripheral region.

Each qubit is often affected by crosstalk from peripheral qubits. Therefore, as an index reflecting the influence of crosstalk, a density of the number of applied gates in consideration of the peripheral region, for example, an average number of gates per qubit is computed. The density of the quantum gates applied to the peripheral region of the qubit $q_i$ is denoted by GD(P1, P2, $q_i$). D means density. The setting contents of P1 and P2 are the same as G(P1, P2, $q_i$). A number of adjacent bits of $q_i$ to be considered as the peripheral region is determined in advance. For example, a range of qubits adjacent to the qubit $q_i$ by one bit, for example, by one edge may be set as the peripheral region. Alternatively, a range of qubits adjacent to the qubit $q_i$ with a distance of two bits, for example, two edges at most therebetween may be set as the peripheral region.

Number-of-gates information 111 is an example of information holding G(P1, P2, $q_i$) and GD(P1, P2, $q_i$) for a certain quantum circuit c. The number-of-gates information 111 is stored in, for example, the execution result storage unit 110 for each quantum circuit. The number-of-gates information 111 includes items of qubits of QPU, G(S, 1q, $q_i$), G(S, 2q, $q_i$), GD(S, 1q, $q_i$), and GD(S, 2q, $q_i$).

Identification information of the qubit $q_i$, for example, the physical qubit $q_i$ in the quantum device 220 is registered in the item of the qubits of QPU. A value of G(S, 1q, $q_i$) is registered in the item of G(S, 1q, $q_i$). A value of G(S, 2q, $q_i$) is registered in the item of G(S, 2q, $q_i$). A value of GD(S, 1q, $q_i$) is registered in the item of GD(S, 1q, $q_i$). A value of GD(S, 2q, $q_i$) is registered in the item of GD(S, 2q, $q_i$).

The number-of-gates information 111 in FIG. 22 exemplifies G(P1, P2, $q_i$) and GD(P1, P2, $q_i$) for the quantum circuit 53. The adjacency relationships of the qubits $q_0$ to $q_7$ are represented by the graph 230. The basis gates, for example, basis quantum gates are SX, CX, and RZ. It is assumed that the qubit $q_i$ of the quantum circuit 53 is mapped to the qubit $q_i$ of the quantum device 220.

G is the number of gates applied to the qubit $q_i$, and is a value counted after each quantum gate of the quantum circuit 53 is decomposed into the basis gates. GD is the density of the number of gates applied in the peripheral region of the qubit $q_i$. In this example, it is assumed that the peripheral region of the qubit $q_i$ is a range that may be reached by one edge for the qubit $q_i$, for example, a range up to one adjacent qubit.

For example, the number-of-gates information 111 includes a record of, for the qubit $q_0$, G(S, 1q, $q_i$) = 29, G(S, 2q, $q_i$) = 38, GD(S, 1q, $q_i$) = 51, and GD(S, 2q, $q_i$) = 77. In this records, $q_i = q_0$.

The number-of-gates information 111 includes similar records for the other qubits $q_1$ to $q_4$. However,

since the qubits $q_5$ to $q_7$ of the quantum device 220 have not been used in the quantum circuit corresponding to the number-of-gates information 111, "N/A" (Not Available) is described in all the items for the qubits $q_5$ to $q_7$.

For example, GD(S, 1q, $q_0$) is computed as follows. A peripheral region of the qubit $q_0$ corresponds to the qubits $q_0$, $q_1$, and $q_2$. Thus, the gate density in the peripheral region of the qubit $q_0$, for example, the average number of gates per qubit GD(S, 1q, $q_0$) is computed as GD(S, 1q, $q_0$) = (29 + 57 + 68)/3 ≈ 51.

GD(S, 2q, $q_3$) is computed as follows. A peripheral region of the qubit $q_3$ corresponds to the qubits $q_1$, $q_2$, and $q_3$. Since the qubit $q_5$ has not been used, it is excluded from the density computation. Thus, the gate density in the peripheral region of the qubit $q_3$, for example, the average number of gates per qubit GD(S, 1q, $q_3$) is computed as GD(S, 1q, $q_3$) = (67 + 127 + 86)/3 ≈ 93.

In step S17, the safety range update unit 140 performs the following processing. Based on G and GD computed for each quantum circuit c within the time window $W_T$, the safety range update unit 140 computes the ranges of the values of G and GD. The range of the values of G is denoted by RG(P1, P2, $q_i$). The range of the values of GD is denoted by RGD(P1, P2, $q_i$). R means the range.

For example, it is assumed that a set of quantum circuits that are executed within the time window $W_T$ and are determination targets of execution success/failure is {$c_1$, $c_2$, ..., and $c_{1000}$}. The safety range update unit 140 obtains G and GD for each cj included in this set.

RG(S, 1q, $q_i$) is defined as the minimum value to the maximum value of G(S, 1q, $q_i$) of $c_1$ to $c_{1000}$. For example, RG(S, 1q, $q_i$) = 20 to 153 is determined.

With respect to all the combinations of S/F (success/failure), 1q/2q, and $q_0$ to $q_7$, the safety range update unit 140 similarly obtains RG and RGD from the minimum values/maximum values of G and GD of $c_1$ to $c_{1000}$.

By examining the overlap between the ranges of the number of gates at the time of execution success/failure based on RG, the safety range update unit 140 obtains a safety range SRG(P2, $q_i$) and a semi-safety range SSRG(p2, $q_i$) for each of the qubits. S in SRG means safe. SS in SSRG means semi-safe.

By examining the overlap between the ranges of the gate densities at the time of execution success/failure based on RGD, the safety range update unit 140 obtains a safety range SRGD (P2, $q_i$) and a semi-safety range SSRGD (P2, $q_i$) for each of the qubits.

P2 of SRG, SSRG, SRGD, and SSRGD is set to either "1q" (one-qubit gate) or "2q" (two-qubit gate).

The safety range SRG/SRGD is a range of the number/density of gates in which there is only a success case. The semi-safety range SSRG/SSRGD is a range of the number/density of gates in which the success cases and the failure cases are mixed. The safety range update unit 140 adds a "section greater than or equal to 0 and smaller than L" of the number/density of gates to the safety range SRG/SRGD. L is a smaller value of the minimum value of the safety range and the minimum value of the semi-safety range. The success probability decreases in order of the safety range > the semi-safety range > the other ranges.

There may be causes other than noise that cause the execution of the quantum circuit to fail. For example, in VQA, there is a possibility that convergence to a desired state is not achieved due to insufficient expressiveness (insufficient parameters) of the ansatz circuit, an inappropriate optimization algorithm, or the like. Thus, the safety range update unit 140 uses the number-of-gates information at the time of execution success as a core of the index, and uses the number-of-gates information at the time of failure just as additional information. The safety range update unit 140 does not use, as an index, a range of the number of gates in which there is only a failure case.

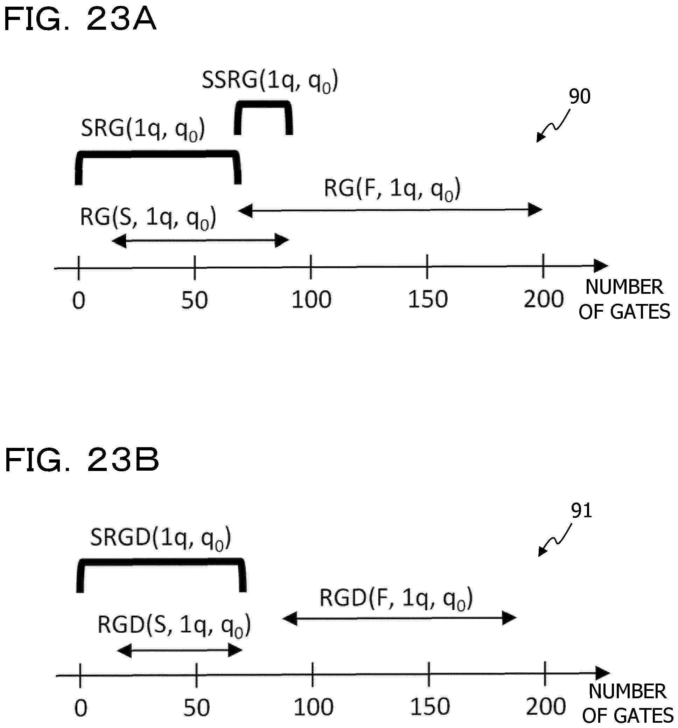

FIGs. 23A and 23B are diagrams for describing computation examples of a safety range of the number of applied gates. FIG. 23A exemplifies a relationship 90 between $RG(S, 1q, q_0)$, $RG(F, 1q, q_0)$, a safety range $SRG(1q, q_0)$, and a semi-safety range $SSRG(1q, q_0)$. FIG. 23B exemplifies a relationship 91 between $RGD(S, 1q, q_0)$, $RGD(F, 1q, q_0)$, and a safety range $SRGD(1q, q_0)$.

In the examples in FIGs. 23A and 23B, it is assumed that $RG(S, 1q, q_0) = 20$ to 90, $RG(F, 1q, q_0) = 70$ to 200, $RGD(S, 1q, q_0) = 25$ to 70, and $RGD(F, 1q, q_0) = 90$ to 190.

In this case, as indicated by the relationship 90, $SRG(1q, q_0) = 0$ to 69 and $SSRG(1q, q_0) = 70$ to 90.

As indicated by the relationship 91, $SRGD(1q, q_0) = 0$ to 70. For $RGD(S, 1q, q_0) = 25$ to 70 and $RGD(F, 1q, q_0) = 90$ to 190, no overlapping range exists, and thus $SSRGD(1q, q_0) = $ none.

With respect to other qubits and two-qubit gates, the safety range update unit 140 may compute SRG, SSRG, SRGD, and SSRGD in the same manner.

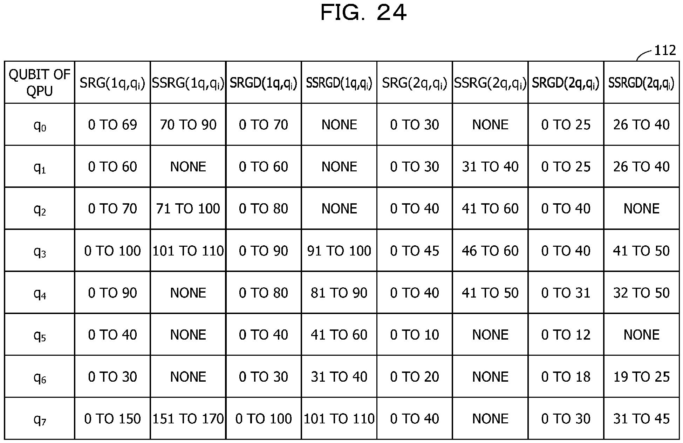

FIG. 24 is a diagram illustrating an example of safety range information.

Safety range information 112 is information that holds SRG, SSRG, SRGD, and SSRGD for each qubit. The safety range information 112 is stored in, for example, the execution result storage unit 110. The safety range information 112 includes items of qubits of QPU, $SRG(1q, q_i)$, $SSRG(1q, q_i)$, $SRGD(1q, q_i)$, $SSRGD(1q, q_i)$, $SRG(2q, q_i)$, $SSRG(2q, q_i)$, $SRGD(2q, q_i)$, and $SSRGD(2q, q_i)$.

Identification information of the qubit $q_i$, for example, the physical qubit $q_i$ in the quantum device 220 is registered in the item of the qubits of QPU. A value of $SRG(1q, q_i)$ is registered in the item of $SRG(1q, q_i)$. A value of $SSRG(1q, q_i)$ is registered in the item of $SSRG(1q, q_i)$. A value of $SRGD(1q, q_i)$ is registered in the item of $SRGD(1q, q_i)$. A value of $SSRGD(1q, q_i)$ is registered in the item of $SSRGD(1q, q_i)$. A value of $SRG(2q, q_i)$ is registered in the item of $SRG(2q, q_i)$. A value of $SSRG(2q, q_i)$ is registered in the item of $SSRG(2q, q_i)$. A value of $SRGD(2q, q_i)$ is registered in the item of $SRGD(2q, q_i)$. A value of $SSRGD(2q, q_i)$ is registered in the item of $SSRGD(2, q_i)$.

For example, the safety range information 112 includes a record of, for the qubit $q_0$, $SRG(1q, q_i) = 0$ to 69, $SSRG(1q, q_i) = 70$ to 90, $SRGD(1q, q_i) = 0$ to 70, $SSRGD(1q, q_i) = $ none, $SRG(2q, q_i) = 0$ to 30, $SSRG(2q, q_i) = $ none, $SRGD(2q, q_i) = 0$ to 25, $SSRGD(2q, q_i) = 26$ to 40. In this records, $q_i = q_0$.

For the other qubits $q_1$ to $q_7$, similarly to the qubit $q_0$, the safety range information 112 includes records including each value of SRG, SSRG, SRGD, and SSRGD.

Based on the safety range information 112, the execution method adjustment unit 130 adjusts the execution method of the quantum circuit to be newly executed. Next, a processing procedure at the time of quantum circuit execution based on the safety range information 112 will be described.

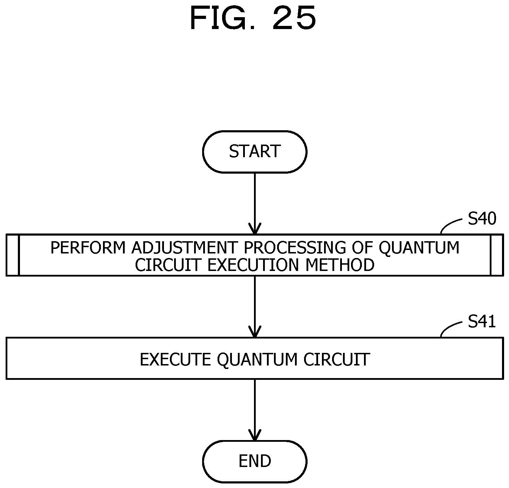

FIG. 25 is a flowchart illustrating a processing example at the time of quantum circuit execution.

(S40) When an execution instruction of a quantum circuit is accepted from the job scheduler 120, the execution method adjustment unit 130 performs adjustment processing of a quantum circuit execution method. Details of this adjustment processing will be described later.

(S41) Based on a result of the adjustment processing in step S40, the execution method adjustment unit 130 instructs the quantum computer 200 to execute a quantum circuit. Based on the instruction from the execution method adjustment unit 130, the quantum computer 200 executes this quantum circuit. The processing at the time of quantum circuit execution ends.

The result of the adjustment processing by the execution method adjustment unit 130 indicates a correspondence relationship (qubit mapping) between a logical qubit of the quantum circuit and a physical qubit of the quantum device 220 (QPU).

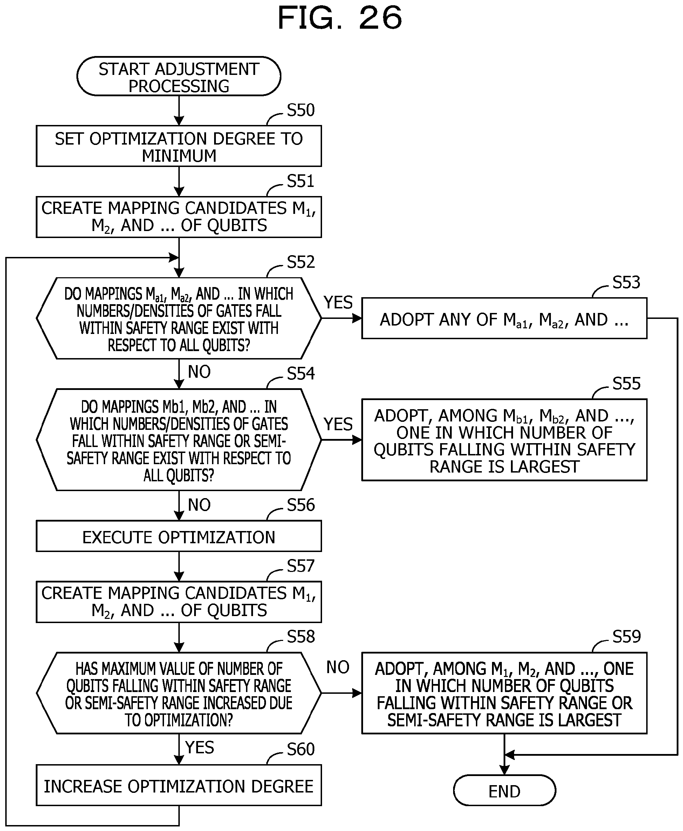

FIG. 26 is a flowchart illustrating an example of the adjustment processing of the quantum circuit execution method.

The adjustment processing of the quantum circuit execution method corresponds to step S40.

(S50) The execution method adjustment unit 130 sets an optimization degree for the quantum circuit to be executed to the minimum, for example, the lightest optimization.

(S51) The execution method adjustment unit 130 creates mapping candidates $M_1$, $M_2$, and ... of the qubits. As described above, the qubit mapping indicates a correspondence relationship in which the logical qubit in the quantum circuit is mapped to which physical qubit over the quantum device 220 (QPU).

(S52) With respect to all the qubits (physical qubits), the execution method adjustment unit 130 determines whether or not mappings $M_{a1}$, $M_{a2}$, and ... in which the numbers/densities of gates fall within the safety range indicated by the safety range information 112 exist. When $M_{a1}$, $M_{a2}$, and ... exist, the processing proceeds to step S53. When $M_{a1}$, $M_{a2}$, and ... do not exist, the processing proceeds to step S54.

(S53) The execution method adjustment unit 130 adopts any of $M_{a1}$, $M_{a2}$, and .... For example, the execution method adjustment unit 130 may randomly select one of $M_{a1}$, $M_{a2}$, and .... The adjustment processing ends.

(S54) With respect to all the qubits (physical qubits), the execution method adjustment unit 130 determines whether or not mappings $M_{b1}$, $M_{b2}$, and ... in which the numbers/densities of gates fall within the safety range or the semi-safety range indicated by the safety range information 112 exist. When $M_{b1}$, $M_{b2}$, and ... exist, the processing proceeds to step S55. When $M_{b1}$, $M_{b2}$, and ... do not exist, the processing proceeds to step S56.

(S55) The execution method adjustment unit 130 adopts, among $M_{b1}$, $M_{b2}$, and ..., one in which the number of qubits falling within the safety range is the largest. The adjustment processing ends.

(S56) The execution method adjustment unit 130 executes optimization of the quantum circuit.

(S57) The execution method adjustment unit 130 creates mapping candidates $M_1$, $M_2$, and ... of the qubits.

(S58) The execution method adjustment unit 130 determines whether or not the maximum value of the number of qubits falling within the safety range or the semi-safety range has increased due to the optimization. When the maximum value of the number of qubits falling within the safety range or the semi-safety range has increased, the processing proceeds to step S60. When the maximum value of the number of qubits falling within the safety range or the semi-safety range has not increased, the processing proceeds to step S59.

(S59) The execution method adjustment unit 130 adopts, among $M_1$, $M_2$, and ..., the one in which the number of qubits falling within the safety range or the semi-safety range is the largest. The adjustment processing ends.

(S60) The execution method adjustment unit 130 increases the optimization degree. The processing proceeds to step S52.

Next, an example of adjustment of the execution method of the quantum circuit based on the safety range information 112 will be described.

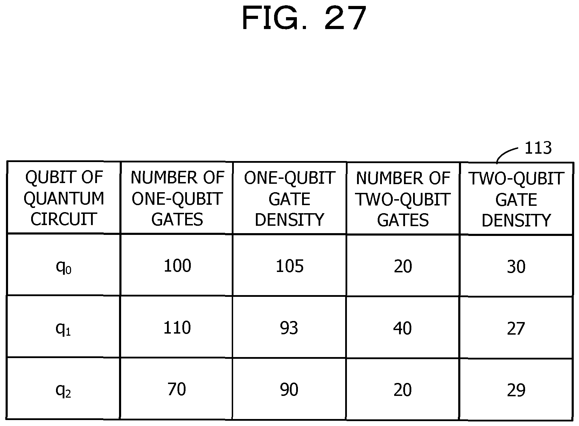

FIG. 27 is a diagram illustrating an example of the numbers/densities of gates of a quantum circuit.

The example of adjustment of the execution method for the quantum circuit c having the numbers/densities of gates indicated in a table 113 will be described below. For example, the table 113 may be created by the execution method adjustment unit 130 based on the quantum circuit c and stored in the execution result storage unit 110. The quantum circuit c includes three qubits $q_0$ to $q_2$. The gate density is an average number of gates in a region including one adjacent qubit. This average number of gates corresponds to GD.

A number of one-qubit gates (may be referred to as one-quantum gates), a one-qubit gate density, a number of two-qubit gates (may be referred to as two-quantum gates), and a two-qubit gate density of the qubit $q_0$ are "100", "105", "20", and "30", respectively.

A number of one-qubit gates, a one-qubit gate density, a number of two-qubit gates, and a two-qubit gate density of the qubit $q_1$ are "110", "93", "40", and "27", respectively.

A number of one-qubit gates, a one-qubit gate density, a number of two-qubit gates, and a two-qubit gate density of the qubit $q_2$ are "70", "90", "20", and "29", respectively.

In the following manner, the execution method adjustment unit 130 performs the mapping of the qubits and optimization such that the numbers/densities of gates of as many qubits as possible fall within the safety range or the semi-safety range. First, the execution method adjustment unit 130 sets the optimization degree to the minimum.

Next, the execution method adjustment unit 130 creates mapping candidates $M_1$, $M_2$, and ... of the qubits. The execution method adjustment unit 130 may use arbitrary qubit mapping method to create the mapping candidates $M_1$, $M_2$, and ... of the qubits.

For example, the execution method adjustment unit 130 sequentially maps qubits having large two-qubit gate densities in the quantum circuit c to qubits having large maximum values of $SRGD(2q, q_i)$. This is a method in which qubits are preferentially mapped from a qubit having a small error rate. Since the maximum value of $SRGD(2q, q_i)$ is considered to be an index inversely correlated with the error rate, a qubit having a large maximum value of $SRGD(2q, q_i)$ is preferentially mapped. Consequently, the following mapping candidates $M_1$ and $M_2$ are obtained.

$$M_1: (q_3 \rightarrow q_0), (q_2 \rightarrow q_2), \text{ and } (q_4 \rightarrow q_1)$$

$$M_2: (q_2 \rightarrow q_0), (q_3 \rightarrow q_2), \text{ and } (q_4 \rightarrow q_1)$$

"->" is an arrow directed from left to right. The left side of the arrow indicates a qubit number of the quantum device 220 (QPU), and the right side of the arrow indicates a qubit number of the quantum circuit c. For example, $(q_3 \rightarrow q_0)$ indicates that the physical qubit $q_3$ of the quantum device 220 is mapped to the logical qubit $q_0$ of the quantum circuit c.

With $M_1$ and $M_2$, none of $q_0$, $q_1$, and $q_2$ of the quantum circuit c fall within the semi-safety range.

With respect to $M_1$ and $M_2$, the execution method adjustment unit 130 performs the determination of step S52. In this case, neither $M_1$ nor $M_2$ satisfies the condition of step S52. Thus, the execution method adjustment unit 130 determines No in step S52.

With respect to $M_1$ and $M_2$, the execution meth-

od adjustment unit 130 performs the determination of step S54. In this case, neither $M_1$ nor $M_2$ satisfies the condition of step S54. Thus, the execution method adjustment unit 130 determines No in step S54.

The execution method adjustment unit 130 performs the optimization of step S56 for the quantum circuit c to reduce the number of gates. Due to the first optimization execution on the quantum circuit c, the optimization degree is minimized.

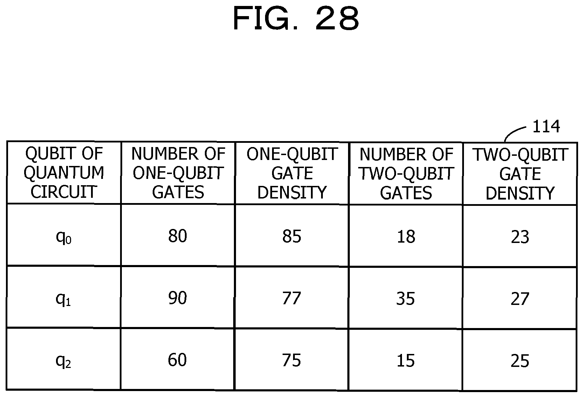

FIG. 28 is a diagram illustrating an example of the numbers/densities of gates after optimization.

A table 114 is an example of the numbers/densities of gates of the qubits $q_0$ to $q_3$ of the quantum circuit c after optimization. For example, the table 114 may be created by the execution method adjustment unit 130 based on the quantum circuit c after optimization and stored in the execution result storage unit 110.

The number of one-qubit gates, the one-qubit gate density, the number of two-qubit gates, and the two-qubit gate density of the qubit $q_0$ are "80", "85", "18", and "23", respectively.

The number of one-qubit gates, the one-qubit gate density, the number of two-qubit gates, and the two-qubit gate density of the qubit $q_1$ are "90", "77", "35", and "27", respectively.

The number of one-qubit gates, the one-qubit gate density, the number of two-qubit gates, and the two-qubit gate density of the qubit $q_2$ are "60", "75", "15", and "25", respectively.

By using the same method as the method illustrated in FIG. 27, the execution method adjustment unit 130 re-creates mapping candidates $M_1$ and $M_2$ of the qubits. Consequently, the execution method adjustment unit 130 obtains the following $M_1$ and $M_2$.

$$M_1: (q_3 \text{ -> } q_1), (q_2 \text{ -> } q_2), \text{ and } (q_4 \text{ -> } q_0)$$

$$M_2: (q_2 \text{ -> } q_1), (q_3 \text{ -> } q_2), \text{ and } (q_4 \text{ -> } q_0)$$

With $M_1$, $q_1$ and $q_2$ of the quantum circuit c fall within the safety range. $q_0$ of the quantum circuit c is out of the safety range but falls within the semi-safety range.

With $M_2$, $q_2$ of the quantum circuit c falls within the safety range. $q_0$ and $q_1$ of the quantum circuit c are out of the safety range but fall within the semi-safety range.

With respect to the newly created $M_1$ and $M_2$, the execution method adjustment unit 130 performs the determination of step S58. Before optimization, the number of qubits falling within the safety range or the semi-safety range is zero for $M_1$ and zero for $M_2$. The maximum value of these is zero.

After optimization, the number of qubits falling within the safety range or the semi-safety range is three for $M_1$ and three for $M_2$. The maximum value of these is three.

Consequently, new $M_1$ and $M_2$ satisfy the condition of step S58. Thus, the execution method adjustment unit 130 determines Yes in step S58. In step S60, the execution method adjustment unit 130 increases the optimization degree, and proceeds to step S52.

With respect to the new $M_1$ and $M_2$, the execution method adjustment unit 130 performs the determination of step S52. Since a qubit that does not fall within the safety range exists in the $M_1$ and $M_2$, neither $M_1$ nor $M_2$ satisfies the condition of step S52. Thus, the execution method adjustment unit 130 determines No in step S52.

With respect to the new $M_1$ and $M_2$, the execution method adjustment unit 130 performs the determination of step S54. Both of these $M_1$ and $M_2$ satisfy the condition of step S54. Thus, the execution method adjustment unit 130 determines Yes in step S54.

From among these $M_1$ and $M_2$, the execution method adjustment unit 130 adopts a mapping destination in which the number of qubits falling within the safety range is the largest. In this case, the execution method adjustment unit 130 adopts $M_1$. Since the mapping is determined to be $M_1$, the execution method adjustment unit 130 ends the adjustment processing of the execution method.

In this manner, the classical computer 100 may use the safety range information 112 for adjustment of the execution method (qubit mapping and optimization degree) of the quantum circuit.

In addition to the above, the safety range information 112 may be used for the following contents. For example, the safety range information 112 may be used generally for actions in which it is sufficient to know a rough noise level. For example, the execution method adjustment unit 130 may monitor an increase or decrease in the safety range (for example, the number/density of gates allowed for execution success) based on the safety range information 112 and detect an increase in noise level to specify a timing at which recalibration is to be performed. Recalibration is to adjust a control method of a qubit so that an error rate is reduced, and for example, in a case of a superconducting qubit, recalibration is to adjust an intensity of a microwave to be radiated, or the like.

Alternatively, by disclosing the safety range information 112 to the user, the classical computer 100 may enable the user to (roughly) grasp the characteristics of the quantum device 220 (QPU). For example, instead of disclosing a specific error rate or the like for each qubit, a safety range for each qubit, for example, how many gates are applied to increase the success probability may be disclosed. With this, the user may view the numerical value of the safety range and select the quantum device 220 (QPU) or the qubit to be used. For example, the classical computer 100 may support efficient selection of the quantum device 220 (QPU) or the qubit to be used for execution of the quantum circuit by the user.

Processing of noise estimation by the classical computer 100 also suitably functions when the quantum cloud service is congested. For example, as a number or types of user jobs (quantum circuits) to be executed increases, an index value that more accurately reflects a magnitude of noise, for example, an allowed/not allowed number of gates is obtained. When there is no congestion, the classical computer 100 may directly compute the error rate by executing the RB or the like.

As described above, the classical computer 100 executes the following processing.

The processor 101 acquires a plurality of output distributions corresponding to a plurality of quantum circuits executed by the quantum computer 200 including a plurality of qubits. For example, the processor 101 acquires a plurality of output distributions that indicate distributions of output states of the plurality of qubits that correspond to each of the plurality of quantum circuits when each of the plurality of quantum circuits is executed a plurality of times for the plurality of qubits. Based on a deviation degree between each of the plurality of output distributions and a uniform distribution, the processor 101 determines execution success/failure of each of the plurality of quantum circuits. Based on a determination result of execution success/failure of each of the plurality of quantum circuits and a number of quantum gates applied to each of the plurality of qubits in each of the plurality of quantum circuits, the processor 101 estimates information related to noise of each of the plurality of qubits.

With this, the classical computer 100 may efficiently acquire the information related to noise for each qubit. The classical computer 100 does not have to perform noise measurement by an existing method such as RM, and does not have to put pressure on a use time of the quantum computer 200 for the noise measurement.

For example, in the determination of execution success/failure, the processor 101 compares the deviation degree between the output distribution and the uniform distribution with a threshold. When the deviation degree is greater than or equal to the threshold, the processor 101 determines that execution is successful for a quantum circuit corresponding to the output distribution, and when the deviation degree is less than the threshold, the processor 101 determines that execution has failed for the quantum circuit.

With this, the classical computer 100 may efficiently determine execution success/failure of a quantum circuit of which an expected output value is a partly-amplified distribution.

For each quantum circuit for which execution has succeeded, in the estimation of the information related to noise, the processor 101 acquires first information that indicates the number of quantum gates applied to each of a plurality of qubits (physical qubits) in the quantum circuit for which execution has succeeded among a plurality of quantum circuits. For each of the quantum circuits for which execution has failed, the processor 101 acquires second information that indicates the number of quantum gates applied to each of the plurality of qubits in the quantum circuit for which execution has failed among the plurality of quantum circuits. Based on the first information and the second information acquired for each of the plurality of quantum circuits, the processor 101 generates safety range information that indicates a range of the number of quantum gates allowed to be applied to each of the plurality of qubits.

With this, the classical computer 100 may efficiently acquire the information related to noise for each qubit. As described above, the safety range information is information indirectly reflecting noise of each qubit. The number of quantum gates applied to the qubit is, for example, the number of one-qubit gates and the number of two-qubit gates. The number of quantum gates may be the number of basis gates (basis quantum gates) used for various quantum gates.

For example, the first information and the second information may each include an average value of the numbers of quantum gates applied to the qubit and other qubits adjacent to the qubit. The safety range information may include a range of the average values of the numbers of quantum gates allowed to be applied to the qubit and other qubits adjacent to the qubit. For example, as exemplified by the above-described safety range information 112, the safety range information may include not only information on the safety ranges SRG and SRGD but also information on the semi-safety ranges SSRG and SSRGD.

With this, the classical computer 100 may obtain the information related to noise for each qubit with higher accuracy.

When a first quantum circuit is executed by the quantum computer after the generation of the safety range information, the processor 101 adjusts the number of quantum gates applied to the qubit (physical qubit) used for the execution of the first quantum circuit to be within a range indicated by the safety range information.

With this, the classical computer 100 may increase the probability of execution success of the first quantum circuit. Consequently, the classical computer 100 may increase the reliability of the arithmetic operation by the NISQ computer (quantum computer 200). The processor 101 may adjust the average values of the numbers of quantum gates applied to the qubit used for execution of the first quantum circuit and other qubits adjacent to the qubit to fall within the range of the average values of the numbers of applied gates indicated by the safety range information for these qubits.

Based on information on a second quantum circuit executed by the quantum computer 200 or a program of a quantum algorithm that corresponds to the second quantum circuit, the processor 101 determines whether or not an output distribution of the quantum computer 200 with respect to the second quantum circuit is expected to be a distribution in which an appearance probability of a specific state is amplified (partly-amplified distribution). When the result of the determination is true, the processor 101 uses the output distribution with respect to the second quantum circuit for estimation of the information related to noise. When the result of the determination is false, the processor 101 does not use the output distribution with respect to the second quantum circuit for the estimation of the information related to noise.

With this, the classical computer 100 may appropriately select a quantum circuit to be used for estimation of the information related to noise and may increase the accuracy of the estimated information. For example, the processor 101 may determine whether or not a structure of the second quantum circuit corresponds to a structure of a specific quantum circuit or a quantum algorithm in which an expected output value is a partly-amplified distribution, and may determine that an output for the second quantum circuit is to be used for estimation of the information related to noise in a case where the structure of the second quantum circuit corresponds to the structure of the specific quantum circuit or the quantum algorithm.

The information processing of the first embodiment may be realized by causing the processing unit 12 to execute a program. The information processing of the second embodiment may be realized by causing the processor 101 to execute a program. The program may be recorded in computer-readable recording media such as the optical disc 34 and the memory card 37.

For example, the program may be circulated by distributing recording media in which the program is recorded. The program may be stored in another computer, and the program may be distributed via a network. For example, the computer may store (install) the program recorded in the recording media or the program received from another computer in a storage device such as the memory 102 or the storage device 103, and may read the program from the storage device and execute the program.

**Claims**

1. A noise information estimation program comprising instructions which, when executed by a computer, cause the computer to execute processing comprising:

   acquiring a plurality of output distributions that indicate distributions of output states of a plurality of qubits that correspond to each of a plurality of quantum circuits when each of the plurality of quantum circuits is executed a plurality of times for the plurality of qubits;
   determining execution success/failure of each of the plurality of quantum circuits, based on a deviation degree between each of the plurality of output distributions and a uniform distribution; and
   estimating information related to noise of each of the plurality of qubits, based on a determination result of the execution success/failure of each of the plurality of quantum circuits and a number of quantum gates applied to each of the plurality of qubits in each of the plurality of quantum circuits.

2. The noise information estimation program according to claim 1, wherein
   in the determining of the execution success/failure, the deviation degree is compared with a threshold, and it is determined that execution is successful in a case where the deviation degree is greater than or equal to the threshold, and it is determined that execution has failed in a case where the deviation degree is less than the threshold.

3. The noise information estimation program according to claim 1 or claim 2, wherein

   in the estimating,
   first information that indicates the number of quantum gates applied to each of the plurality of qubits in a quantum circuit for which execution has succeeded among the plurality of quantum circuits is acquired for each of the quantum circuits, and second information that indicates the number of quantum gates applied to each of the plurality of qubits in a quantum circuit for which execution has failed among the plurality of quantum circuits is acquired for each of the quantum circuits, and
   safety range information that indicates a range of a number of quantum gates allowed to be applied to each of the plurality of qubits is generated based on the first information and the second information acquired for each of the plurality of quantum circuits.

4. The noise information estimation program according to claim 3, wherein

   the first information and the second information each include an average value of the numbers of quantum gates applied to a qubit and other qubits adjacent to the qubit, and
   the safety range information includes a range of the average values of the numbers of quantum gates allowed to be applied to the qubit and the other qubits adjacent to the qubit.

5. The noise information estimation program according to claim 3 or claim 4, the processing further comprising:
   adjusting, when a first quantum circuit is executed by the quantum computer after generation of the safety range information, the number of quantum gates applied to a qubit used for execution of the first quantum circuit to be within a range indicated by the safety range information.

6. The noise information estimation program according to any preceding claim, the processing further comprising:

 determining, based on information on a second quantum circuit executed by the quantum computer or a program of a quantum algorithm that corresponds to the second quantum circuit, whether or not an output distribution of the quantum computer with respect to the second quantum circuit is expected to be a distribution in which an appearance probability of a specific state is amplified;
 using the output distribution with respect to the second quantum circuit for estimation of the information related to noise, when a result of the determination is true; and
 not using the output distribution with respect to the second quantum circuit for estimation of the information related to noise, when the result of the determination is false.

7. A noise information estimation method implemented by a computer, the noise information estimation method comprising:

 the computer acquiring a plurality of output distributions that indicate distributions of output states of a plurality of qubits that correspond to each of a plurality of quantum circuits when each of the plurality of quantum circuits is executed a plurality of times for the plurality of qubits;
 the computer determining execution success/failure of each of the plurality of quantum circuits, based on a deviation degree between each of the plurality of output distributions and a uniform distribution; and
 the computer estimating information related to noise of each of the plurality of qubits, based on a determination result of the execution success/failure of each of the plurality of quantum circuits and a number of quantum gates applied to each of the plurality of qubits in each of the plurality of quantum circuits.

8. An information processing apparatus comprising:

 a storage unit configured to store a plurality of output distributions that indicate distributions of output states of a plurality of qubits that correspond to each of a plurality of quantum circuits when each of the plurality of quantum circuits is executed a plurality of times for the plurality of qubits; and
 a processing unit configured to perform processing including:

 determining execution success/failure of each of the plurality of quantum circuits, based on a deviation degree between each of the plurality of output distributions and a uniform distribution; and
 estimating information related to noise of each of the plurality of qubits, based on a determination result of the execution success/failure of each of the plurality of quantum circuits and a number of quantum gates applied to each of the plurality of qubits in each of the plurality of quantum circuits.

# FIG. 1

# FIG. 2

# FIG. 3

# FIG. 4

FIG. 5

41

$|0\rangle$ —[X]—[⏝]—

# FIG. 6

# FIG. 7

FIG. 8

# FIG. 9

100

CLASSICAL COMPUTER

140

SAFETY
RANGE
UPDATE UNIT

120

JOB
SCHEDULER

130

EXECUTION
METHOD
ADJUSTMENT
UNIT

110

EXECUTION RESULT
STORAGE UNIT

200

QUANTUM
COMPUTER

FIG. 10

**FIG. 11A**

NO NOISE

HELLINGER
DISTANCE FROM
UNIFORM
DISTRIBUTION
0.4965

OBSERVATION
PROBABILITY

60

STATE

**FIG. 11B**

SMALL NOISE

HELLINGER
DISTANCE FROM
UNIFORM
DISTRIBUTION
0.1210

61

**FIG. 11C**

LARGE NOISE

HELLINGER
DISTANCE FROM
UNIFORM
DISTRIBUTION
0.0426

62

# FIG. 12

START

ACQUIRE QUANTUM CIRCUIT SET $CS_T$ EXECUTED WITHIN MOST RECENT T SECONDS — S10

REPEAT FOR EACH QUANTUM CIRCUIT $c \in CS_T$ — S11

IS EXPECTED OUTPUT VALUE OF $c$ PARTLY-AMPLIFIED DISTRIBUTION? (DETERMINATION PROCESSING A) — S12 — NO

YES

IS EXECUTION OF $c$ SUCCESSFUL? (DETERMINATION PROCESSING B) — S13 — NO

YES

UPDATE NUMBER-OF-GATES INFORMATION AT TIME OF EXECUTION SUCCESS — S14

UPDATE NUMBER-OF-GATES INFORMATION AT TIME OF EXECUTION FAILURE — S15

REPEAT FOR EACH QUANTUM CIRCUIT $c \in CS_T$ — S16

COMPUTE SAFETY RANGE FROM NUMBER-OF-GATES INFORMATION AT TIME OF EXECUTION SUCCESS/FAILURE — S17

END

# FIG. 13

START DETERMINATION PROCESSING A

S20

HAS QUANTUM CIRCUIT c BEEN EXECUTED IN VICINITY OF FINAL ITERATION OF "QUANTUM ALGORITHM INVOLVING ITERATION IN WHICH FINAL EXPECTED VALUE IS PARTLY-AMPLIFIED DISTRIBUTION"?

YES

NO

S21

DOES QUANTUM CIRCUIT c INCLUDE GATE PATTERN SPECIFIC TO QUANTUM ALGORITHM IN WHICH EXPECTED VALUE IS PARTLY-AMPLIFIED DISTRIBUTION?

YES

NO

S22

DETERMINE THAT EXPECTED OUTPUT VALUE OF c IS NOT PARTLY-AMPLIFIED DISTRIBUTION

S23

DETERMINE THAT EXPECTED OUTPUT VALUE OF c IS PARTLY-AMPLIFIED DISTRIBUTION

END

## FIG. 14A

```
from library.algorithm import VQE  # READ LIBRARY CLASS PROVIDED BY QUANTUM CLOUD SERVICE

vqe = VQE(ansatz=c, observable=..., optimizer=...)  # DESIGNATE PARAMETER DESIRED FOR VQE
eigenvalue, eigenstate = vqe.run(device=...)  # EXECUTE VQE IN DESIGNATED QUANTUM DEVICE
```

70

## FIG. 14B

51

# FIG. 15

80

VQE EXECUTION PERIOD

END OF VQE EXECUTION PERIOD

TIME WINDOW $W_T$

EXECUTED QUANTUM CIRCUIT

EXECUTION TIME OF QUANTUM CIRCUIT

QUANTUM CIRCUIT c

# FIG. 16

# FIG. 17

```
        ┌─────────────────────────┐
        │   START DETERMINATION   │
        │      PROCESSING B       │
        └─────────────────────────┘
                    │
                    ▼                    ╭ S30
    ┌──────────────────────────────┐
    │  COMPUTE DISTANCE D BETWEEN   │
    │  OUTPUT DISTRIBUTION OF c AND │
    │     UNIFORM DISTRIBUTION      │
    └──────────────────────────────┘
                    │
                    ▼                    ╭ S31
                                              NO
    ◁──────── D ≥ THRESHOLD? ──────────▷─────────┐
                    │                            │
                  YES     ╭ S32                  │         ╭ S33
                    ▼                            ▼
    ┌──────────────────────────────┐  ┌──────────────────────────────┐
    │ DETERMINE THAT EXECUTION IS  │  │ DETERMINE THAT EXECUTION HAS │
    │      SUCCESSFUL FOR c        │  │        FAILED FOR c          │
    └──────────────────────────────┘  └──────────────────────────────┘
                    │                            │
                    ▼◀───────────────────────────┘
              ┌───────────┐
              │    END    │
              └───────────┘
```

# FIG. 18

# FIG. 19

# FIG. 20

# FIG. 21

# FIG. 22

| QUBIT OF QPU | $G(S,1q,q_i)$ | $G(S,2q,q_i)$ | $GD(S,1q,q_i)$ | $GD(S,2q,q_i)$ |
|---|---|---|---|---|
| $q_0$ | 29 | 38 | 51 | 77 |
| $q_1$ | 57 | 67 | 57 | 64 |
| $q_2$ | 68 | 127 | 54 | 80 |
| $q_3$ | 85 | 86 | 70 | 93 |
| $q_4$ | 33 | 70 | 51 | 99 |
| $q_5 \sim q_7$ | N/A | N/A | N/A | N/A |

111

## FIG. 23A

SSRG(1q, $q_0$)

SRG(1q, $q_0$)

90

RG(F, 1q, $q_0$)

RG(S, 1q, $q_0$)

| | | | | |
|---|---|---|---|---|
| 0 | 50 | 100 | 150 | 200 |

NUMBER OF GATES

## FIG. 23B

91

SRGD(1q, $q_0$)

RGD(F, 1q, $q_0$)

RGD(S, 1q, $q_0$)

| | | | | |
|---|---|---|---|---|
| 0 | 50 | 100 | 150 | 200 |

NUMBER OF GATES

# FIG. 24

112

| QUBIT OF QPU | SRG(1q,$q_i$) | SSRG(1q,$q_i$) | SRGD(1q,$q_i$) | SSRGD(1q,$q_i$) | SRG(2q,$q_i$) | SSRG(2q,$q_i$) | SRGD(2q,$q_i$) | SSRGD(2q,$q_i$) |
|---|---|---|---|---|---|---|---|---|
| $q_0$ | 0 TO 69 | 70 TO 90 | 0 TO 70 | NONE | 0 TO 30 | NONE | 0 TO 25 | 26 TO 40 |
| $q_1$ | 0 TO 60 | NONE | 0 TO 60 | NONE | 0 TO 30 | 31 TO 40 | 0 TO 25 | 26 TO 40 |
| $q_2$ | 0 TO 70 | 71 TO 100 | 0 TO 80 | NONE | 0 TO 40 | 41 TO 60 | 0 TO 40 | NONE |
| $q_3$ | 0 TO 100 | 101 TO 110 | 0 TO 90 | 91 TO 100 | 0 TO 45 | 46 TO 60 | 0 TO 40 | 41 TO 50 |
| $q_4$ | 0 TO 90 | NONE | 0 TO 80 | 81 TO 90 | 0 TO 40 | 41 TO 50 | 0 TO 31 | 32 TO 50 |
| $q_5$ | 0 TO 40 | NONE | 0 TO 40 | 41 TO 60 | 0 TO 10 | NONE | 0 TO 12 | NONE |
| $q_6$ | 0 TO 30 | NONE | 0 TO 30 | 31 TO 40 | 0 TO 20 | NONE | 0 TO 18 | 19 TO 25 |
| $q_7$ | 0 TO 150 | 151 TO 170 | 0 TO 100 | 101 TO 110 | 0 TO 40 | NONE | 0 TO 30 | 31 TO 45 |

# FIG. 25

START

↓

PERFORM ADJUSTMENT PROCESSING OF QUANTUM CIRCUIT EXECUTION METHOD — S40

↓

EXECUTE QUANTUM CIRCUIT — S41

↓

END

# FIG. 26

```
        ( START ADJUSTMENT
            PROCESSING )
                 │
                 ▼                    ┌─ S50
   ┌──────────────────────────────┐
   │ SET OPTIMIZATION DEGREE TO   │
   │          MINIMUM             │
   └──────────────────────────────┘
                 │
                 ▼                    ┌─ S51
   ┌──────────────────────────────┐
   │ CREATE MAPPING CANDIDATES M₁,│
   │     M₂, AND ... OF QUBITS     │
   └──────────────────────────────┘
                 │
                 ▼                    ┌─ S52
```

$S50$ — SET OPTIMIZATION DEGREE TO MINIMUM

$S51$ — CREATE MAPPING CANDIDATES $M_1$, $M_2$, AND ... OF QUBITS

$S52$ — DO MAPPINGS $M_{a1}$, $M_{a2}$, AND ... IN WHICH NUMBERS/DENSITIES OF GATES FALL WITHIN SAFETY RANGE EXIST WITH RESPECT TO ALL QUBITS?
— YES → $S53$ — ADOPT ANY OF $M_{a1}$, $M_{a2}$, AND ...
— NO ↓

$S54$ — DO MAPPINGS $M_{b1}$, $M_{b2}$, AND ... IN WHICH NUMBERS/DENSITIES OF GATES FALL WITHIN SAFETY RANGE OR SEMI-SAFETY RANGE EXIST WITH RESPECT TO ALL QUBITS?
— YES → $S55$ — ADOPT, AMONG $M_{b1}$, $M_{b2}$, AND ..., ONE IN WHICH NUMBER OF QUBITS FALLING WITHIN SAFETY RANGE IS LARGEST
— NO ↓

$S56$ — EXECUTE OPTIMIZATION

$S57$ — CREATE MAPPING CANDIDATES $M_1$, $M_2$, AND ... OF QUBITS

$S58$ — HAS MAXIMUM VALUE OF NUMBER OF QUBITS FALLING WITHIN SAFETY RANGE OR SEMI-SAFETY RANGE INCREASED DUE TO OPTIMIZATION?
— NO → $S59$ — ADOPT, AMONG $M_1$, $M_2$, AND ..., ONE IN WHICH NUMBER OF QUBITS FALLING WITHIN SAFETY RANGE OR SEMI-SAFETY RANGE IS LARGEST
— YES ↓

$S60$ — INCREASE OPTIMIZATION DEGREE

( END )

# FIG. 27

| QUBIT OF QUANTUM CIRCUIT | NUMBER OF ONE-QUBIT GATES | ONE-QUBIT GATE DENSITY | NUMBER OF TWO-QUBIT GATES | TWO-QUBIT GATE DENSITY |
|---|---|---|---|---|
| $q_0$ | 100 | 105 | 20 | 30 |
| $q_1$ | 110 | 93 | 40 | 27 |
| $q_2$ | 70 | 90 | 20 | 29 |

113

# FIG. 28

| QUBIT OF QUANTUM CIRCUIT | NUMBER OF ONE-QUBIT GATES | ONE-QUBIT GATE DENSITY | NUMBER OF TWO-QUBIT GATES | TWO-QUBIT GATE DENSITY |
|---|---|---|---|---|
| $q_0$ | 80 | 85 | 18 | 23 |
| $q_1$ | 90 | 77 | 35 | 27 |
| $q_2$ | 60 | 75 | 15 | 25 |

114

Europäisches
Patentamt

European
Patent Office

Office européen
des brevets

# EUROPEAN SEARCH REPORT

**Application Number**

EP 25 15 9590

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ABHINAV DESHPANDE ET AL: "Tight bounds on the convergence of noisy random circuits to the uniform distribution", ARXIV.ORG, CORNELL UNIVERSITY LIBRARY, 201 OLIN LIBRARY CORNELL UNIVERSITY ITHACA, NY 14853, 14 September 2022 (2022-09-14), XP091317982, * abstract * * section I, paragraph 3 * * section I, paragraph 4 * * section II-A-3, paragraph 1 * * section II-B * * section IV, lines 1-2 * * section V-A * * section V-B * * equation (1) * * equation (21) * * equation (A1) * * equation (A6) * * page 5, column 1, paragraph 1 * * page 8, column 2, Lemma 1 * * page 10, column 2, paragraph 1 * * page 16, Lemma 2 * * theorem 1 * * corollary 1 * | 1-8 | INV. G06N10/20 |
| A | HANRUI WANG ET AL: "QuEst: Graph Transformer for Quantum Circuit Reliability Estimation", ARXIV.ORG, CORNELL UNIVERSITY LIBRARY, 201 OLIN LIBRARY CORNELL UNIVERSITY ITHACA, NY 14853, 30 October 2022 (2022-10-30), XP091718627, DOI: 10.1145/3508352.3561118 * the whole document * | 1-8 | |

|  | |
|---|---|
| | **TECHNICAL FIELDS SEARCHED (IPC)** |
| | G06N |

The present search report has been drawn up for all claims

| Place of search | Date of completion of the search | Examiner |
|---|---|---|
| The Hague | 19 August 2025 | Aoun, Marc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022161129 A
- JP 2022172094 A
- US 20230196173
- US 20230196172